# EUROPEAN PATENT SPECIFICATION

(11) **EP 4 044 654 B1**
(45) Date of publication and mention of the grant of the patent: **06.08.2025**
(21) Application number: 20883182.6
(22) Date of filing: 20.10.2020
(51) Int. Cl.: H04W 24/02, H04W 72/04

(54) **METHOD AND APPARATUS FOR ACCESSING NETWORK DEVICE**
VERFAHREN UND VORRICHTUNG FÜR DEN ZUGRIFF AUF EINE NETZWERKVORRICHTUNG
PROCÉDÉ ET APPAREIL PERMETTANT D'ACCÉDER À UN DISPOSITIF DE RÉSEAU

(30) Priority: 31.10.2019 CN 201911051627
(43) Date of publication of application: 17.08.2022
(73) Proprietor: Huawei Technologies Co., Ltd., Longgang District Shenzhen, Guangdong 518129 (CN)
(72) Inventor: YANG, Shuigen, Shenzhen, Guangdong 518129 (CN); TAN, Wei, Shenzhen, Guangdong 518129 (CN)
(74) Representative: Maiwald GmbH
(86) International application number: PCT/CN2020/122208
(87) International publication number: WO 2021/082985

(56) References cited:
- WO-A1-2016/045063
- WO-A1-2016/054808
- CN-A- 108 076 488
- CN-A- 109 219 133
- CN-A- 109 874 111
- US-A1- 2016 007 219
- US-A1- 2017 295 054
- US-A1- 2019 268 812
- CMCC: "Architecture and procedures for Local LMF support in NG-RAN", vol. RAN WG3, no. Chongqing, China; 20191014 - 20191018, 5 October 2019 (2019-10-05), XP051810446, Retrieved from the Internet <URL:https://ftp.3gpp.org/tsg_ran/WG3_Iu/TSGR3_105bis/Docs/R3-195831.zip R3-195831_Architecture and procedures for Local LMF support in NG-RAN.doc> [retrieved on 20191005]
- HUAWEI: "Principles for immediate MDT", 3GPP DRAFT; R2-103197 PRINCIPLES FOR IMMEDIATE MDT, vol. RAN WG2, 3 May 2010 (2010-05-03), Montreal, Canada, pages 1 - 2, XP050423104

## Description

### TECHNICAL FIELD

This application relates to the communication field, and more specifically, to a network device access method and apparatus.

### BACKGROUND

US2019/268812A1 describes a cell handover method, apparatus, and system, where the cell handover method includes receiving, by a mobile edge computing (MEC) server, status information of a mobile terminal from a source cell, where the status information includes location information and speed information, determining, by the MEC server, a target cell based on the status information, where the MEC server serves the target cell, the target cell is neighboring to the source cell, and coverage of the target cell partially overlaps coverage of the source cell, and sending, by the MEC server, an identifier of the target cell to the mobile terminal using the source cell. According to the cell handover method, apparatus, and system provided in this application, cell handover is controlled using the MEC server to improve efficiency of the cell handover.

US2016/007219A1 describes that a radio base station of the invention includes: a measurement unit configured to measure a throughput of an "Immediate MDT" target mobile station UE; and a management unit configured to manage a CA-related state of the "Immediate MDT" target mobile station UE, together with the throughput of the "Immediate MDT" target mobile station UE which is measured by the measurement unit.

In a conventional solution, a terminal needs to access a network device through procedures such as cell search, public land mobile network (public land mobile network, PLMN) selection, cell selection, and random access, to implement access to the network device. In other words, before the terminal accesses the network device, information exchange needs to be performed for a plurality of times, to obtain various parameter configurations required for accessing the network device. For example, the terminal needs to obtain, in a cell search procedure, a cell that can be used by the terminal, and obtain, in a random access procedure, a time-frequency resource that can be used by the terminal.

In other words, the terminal needs to perform exchange of a large amount of signaling to obtain the various parameter configurations required for accessing the network device. Consequently, signaling overheads of the terminal are high.

### SUMMARY

This application provides a network device access method and apparatus, to reduce signaling overheads of a terminal.

Appedned claim 1 defines a network device access method. Appended claim 5 defines a network device access method. Appended claim 7 defines a terminal. Appended claim 10 defines an operation assistance information, OAI, network element. The invention and its scope of protection is defined by these independent claims. The following aspects and implementations of the disclosure provide examples of how technical subject matters can be combined one with the other.

According to a first aspect, a network device access method is provided. The method includes: receiving parameter configuration information, where the parameter configuration information is used to indicate a time-frequency resource required by a terminal to transmit data and a cell that can be used by the terminal to transmit the data; and accessing a network device based on the parameter configuration information.

The terminal receives the parameter configuration information, where the parameter configuration information is used to indicate the time-frequency resource required by the terminal to transmit the data and the cell that can be used by the terminal to transmit the data; and further accesses the network device based on the parameter configuration information. To be specific, the terminal may obtain, at a time, the time-frequency resource required to transmit the data and the cell that can be used to transmit the data, and does not need to obtain, through a plurality of times of signaling exchange, the time-frequency resource required to transmit the data and the cell that can be used to transmit the data, so that signaling overheads are reduced.

In some possible implementations, before the receiving parameter configuration information, the method further includes: receiving minimization of drive tests MDT configuration information; performing MDT measurement based on the MDT configuration information, to obtain a measurement result, where the measurement result includes area information of the terminal; and sending the measurement result.

The terminal receives the MDT configuration information, and performs MDT measurement based on the MDT configuration information, to obtain the measurement result, where the measurement result may include the area information of the terminal. The terminal sends the measurement result to an OAI network element. In this way, the OAI network element may determine the parameter configuration information for the terminal based on the area information, and therefore determine more appropriate parameter configuration information, to reduce signaling overheads and improve communication efficiency or communication quality.

In some possible implementations, before the receiving parameter configuration information, the method further includes: sending trigger information, where the trigger information is used to trigger the operation assistance information OAI network element to send the parameter configuration information.

The terminal may send the trigger information to the OAI network element. After receiving the trigger information, the OAI network element may configure the parameter configuration information for the terminal. This avoids a case in which the OAI network element configures the parameter configuration information for the terminal when the terminal does not need the parameter configuration information, so that resource overheads are reduced.

In some possible implementations, the area information is used to indicate a location of the terminal.

The area information may be used to indicate a specific location of the terminal. To be specific, the OAI network element may configure different pieces of parameter configuration information for the terminal based on the location of the terminal, so that the OAI network element determines more appropriate parameter configuration information, to reduce signaling overheads and improve communication efficiency or communication quality.

In some possible implementations, the area information is used to indicate a historical movement track or an expected movement track of the terminal.

The area information is used to indicate the historical movement track or the expected movement track of the terminal, so that the OAI network element further determines more appropriate parameter configuration information, to reduce signaling overheads and improve communication efficiency or communication quality.

According to a second aspect, a network device access method is provided. The method includes: determining parameter configuration information, where the parameter configuration information is used to indicate a time-frequency resource required by a terminal to transmit data and a cell that can be used by the terminal to transmit the data; and sending the parameter configuration information.

An OAI network element determines the parameter configuration information, where the parameter configuration information is used to indicate the time-frequency resource required by the terminal to transmit the data and the cell that can be used by the terminal to transmit the data, and sends the parameter configuration information to the terminal. The terminal accesses a network device based on the parameter configuration information. To be specific, the terminal may obtain, at a time, the time-frequency resource required to transmit the data and the cell that can be used to transmit the data, and does not need to obtain, through a plurality of times of signaling exchange, the time-frequency resource required to transmit the data and the cell that can be used to transmit the data, so that signaling overheads are reduced.

In some possible implementations, the method further includes: receiving a measurement result from an access network device, where the measurement result includes area information of the terminal; and the determining parameter configuration information includes: determining the parameter configuration information based on the area information of the terminal.

The OAI network element receives, from the access network device, the measurement result that includes the area information of the terminal, determines the parameter configuration information for the terminal based on the area information, and therefore determine more appropriate parameter configuration information, to reduce signaling overheads and improve communication efficiency or communication quality.

In some possible implementations, the method further includes: receiving area information of the terminal from an access and mobility management function AMF network element; and the determining parameter configuration information includes: determining the parameter configuration information based on the area information of the terminal.

The OAI network element may receive the area information of the terminal from the AMF network element, determine the parameter configuration information for the terminal based on the area information, and therefore determine more appropriate parameter configuration information, to reduce signaling overheads and improve communication efficiency or communication quality.

In some possible implementations, the area information is used to indicate a location of the terminal.

The area information may be used to indicate a specific location of the terminal. To be specific, the OAI network element may configure different pieces of parameter configuration information for the terminal based on the location of the terminal, so that the OAI network element determines more appropriate parameter configuration information, to reduce signaling overheads and improve communication efficiency or communication quality.

In some possible implementations, the area information is used to indicate a historical movement track or an expected movement track of the terminal.

The area information is used to indicate the historical movement track or the expected movement track of the terminal, so that the OAI network element further determines more appropriate parameter configuration information, to reduce signaling overheads and improve communication efficiency or communication quality.

According to a third aspect, a network device access method is provided. The method includes: receiving parameter configuration information, where the parameter configuration information is used to indicate a time-frequency resource required by a terminal to transmit data and a cell that can be used by the terminal to transmit the data; and sending the parameter configuration information to the terminal.

An access network device receives the parameter configuration information from an OAI network element, where the parameter configuration information is used to indicate the time-frequency resource required by the terminal to transmit the data and the cell that can be used by the terminal to transmit the data, and sends the parameter configuration information to the terminal. The terminal accesses a network device based on the parameter configuration information. To be specific, the terminal may obtain, at a time, the time-frequency resource required to transmit the data and the cell that can be used to transmit the data, and does not need to obtain, through a plurality of times of signaling exchange, the time-frequency resource required to transmit the data and the cell that can be used to transmit the data, so that signaling overheads are reduced.

In some possible implementations, before the receiving parameter configuration information, the method further includes: obtaining minimization of drive tests MDT configuration information; sending the minimization of drive tests MDT configuration information to the terminal; receiving a measurement result from the terminal, where the measurement result is obtained by the terminal through measurement based on the MDT configuration information, and the measurement result includes area information of the terminal; and sending the measurement result to the OAI network element.

The access network device obtains the MDT configuration information, and sends the MDT configuration information to the terminal, so that the terminal performs MDT measurement based on the MDT configuration information, to obtain the measurement result, where the measurement result may include the area information of the terminal. The terminal sends the measurement result to the OAI network element. In this way, the OAI network element may determine the parameter configuration information for the terminal based on the area information, and therefore determine more appropriate parameter configuration information, to reduce signaling overheads and improve communication efficiency or communication quality.

In some possible implementations, the obtaining minimization of drive tests MDT configuration information includes: receiving the MDT configuration information from an operation, administration and maintenance OAM network element; or receive the MDT configuration information from an access and mobility management function AMF network element.

The access network device may obtain the MDT configuration information from the AMF network element, or may obtain the MDT configuration information from the OAM network element, to improve application flexibility of embodiments of this application.

In some possible implementations, the area information is used to indicate a location of the terminal.

The area information may be used to indicate a specific location of the terminal. To be specific, the OAI network element may configure different pieces of parameter configuration information for the terminal based on the location of the terminal, so that the OAI network element determines more appropriate parameter configuration information, to reduce signaling overheads and improve communication efficiency or communication quality.

In some possible implementations, the area information is used to indicate a historical movement track or an expected movement track of the terminal.

The area information is used to indicate the historical movement track or the expected movement track of the terminal, so that the OAI network element further determines more appropriate parameter configuration information, to reduce signaling overheads and improve communication efficiency or communication quality.

According to a fourth aspect, a network device access apparatus is provided. The apparatus may be a terminal or a chip used in the terminal, for example, a chip that may be disposed in the terminal. The apparatus has a function of implementing the first aspect and the possible implementations thereof. The function may be implemented by hardware, or may be implemented by hardware executing corresponding software. The hardware or the software includes one or more modules corresponding to the foregoing function.

In a possible design, the apparatus includes a processing module and a transceiver module. The transceiver module may be, for example, at least one of a transceiver, a receiver, and a transmitter. The transceiver module may include a receiving module and a sending module, and may specifically include a radio frequency circuit or an antenna. The processing module may be a processor. Optionally, the apparatus further includes a storage module, and the storage module may be, for example, a memory. When the apparatus includes the storage module, the storage module is configured to store instructions. The processing module is connected to the storage module, and the processing module may execute the instructions stored in the storage module or instructions from another module, so that the apparatus performs the method according to any one of the first aspect or the possible implementations thereof. In this design, the apparatus may be a terminal.

In another possible design, when the apparatus is a chip, the chip includes a processing module and a transceiver module. The transceiver module may be, for example, an input/output interface, a pin, or a circuit in the chip. The processing module may be, for example, a processor. The processing module may execute instructions, so that the chip in the terminal performs the method according to any one of the aspect or the possible implementations thereof. Optionally, the processing module may execute instructions in a storage module, and the storage module may be a storage module in the chip, for example, a register or a cache. The storage module may alternatively be located inside a communication device but outside the chip, for example, a read-only memory (read-only memory, ROM) or another type of static storage device that can store static information and instructions, or a random access memory (random access memory, RAM).

The processor mentioned anywhere above may be a general-purpose central processing unit (CPU), a microprocessor, an application-specific integrated circuit (application-specific integrated circuit, ASIC), or one or more integrated circuits configured to control program execution of the method according to any one of the first aspect or the possible implementations thereof.

According to a fifth aspect, a network device access apparatus is provided. The apparatus may be an OAI network element or a chip in the OAI network element. The apparatus has a function of implementing the second aspect and the possible implementations thereof. The function may be implemented by hardware, or may be implemented by hardware executing corresponding software. The hardware or the software includes one or more modules corresponding to the foregoing function.

In a possible design, the apparatus includes a processing module and a transceiver module. The transceiver module may be, for example, at least one of a transceiver, a receiver, and a transmitter. The transceiver module may include a receiving module and a sending module, and may specifically include a radio frequency circuit or an antenna. The processing module may be a processor. Optionally, the apparatus further includes a storage module, and the storage module may be, for example, a memory. When the apparatus includes the storage module, the storage module is configured to store instructions. The processing module is connected to the storage module, and the processing module may execute the instructions stored in the storage module or instructions from another module, so that the apparatus performs the method according to any one of the second aspect or the possible implementations thereof.

In another possible design, when the apparatus is a chip, the chip includes a processing module and a transceiver module. The transceiver module may be, for example, an input/output interface, a pin, or a circuit in the chip. The processing module may be, for example, a processor. The processing module may execute instructions, so that the chip in the terminal performs the method according to any one of the second aspect or the possible implementations thereof. Optionally, the processing module may execute instructions in a storage module, and the storage module may be a storage module in the chip, for example, a register or a cache. The storage module may alternatively be located inside a communication device but outside the chip, for example, a read-only memory (read-only memory, ROM) or another type of static storage device that can store static information and instructions, or a random access memory (random access memory, RAM).

The processor mentioned anywhere above may be a general-purpose central processing unit (CPU), a microprocessor, an application-specific integrated circuit (application-specific integrated circuit, ASIC), or one or more integrated circuits configured to control program execution of the method according to any one of the second aspect or the possible implementations thereof.

According to a sixth aspect, a network device access apparatus is provided. The apparatus may be a network device or a chip used in the network device, for example, a chip that may be disposed in the network device. The apparatus has a function of implementing the third aspect and the possible implementations thereof. The function may be implemented by hardware, or may be implemented by hardware executing corresponding software. The hardware or the software includes one or more modules corresponding to the foregoing function.

In a possible design, the apparatus includes a transceiver module. Optionally, the apparatus may further include a processing module. The transceiver module may be, for example, at least one of a transceiver, a receiver, and a transmitter. The transceiver module may include a receiving module and a sending module, and may specifically include a radio frequency circuit or an antenna. The processing module may be a processor.

Optionally, the apparatus further includes a storage module, and the storage module may be, for example, a memory. When the apparatus includes the storage module, the storage module is configured to store instructions. The processing module is connected to the storage module, and the processing module may execute the instructions stored in the storage module or instructions from another module, so that the apparatus performs the method according to any one of the third aspect or the possible implementations thereof.

In another possible design, when the apparatus is a chip, the chip includes a transceiver module and a processing module. The transceiver module may be, for example, an input/output interface, a pin, or a circuit in the chip. The processing module may be, for example, a processor. The processing module may execute instructions, so that the chip in the network device performs the method according to any one of the third aspect or the possible implementations thereof.

Optionally, the processing module may execute instructions in a storage module, and the storage module may be a storage module in the chip, for example, a register or a cache. The storage module may alternatively be located inside a communication device but outside the chip, for example, a read-only memory (read-only memory, ROM) or another type of static storage device that can store static information and instructions, or a random access memory (random access memory, RAM).

The processor mentioned anywhere above may be a general-purpose central processing unit (CPU), a microprocessor, an application-specific integrated circuit (application-specific integrated circuit, ASIC), or one or more integrated circuits configured to control program execution of the method according to the third aspect.

According to a seventh aspect, a computer storage medium is provided. The computer storage medium stores program code, and the program code is used to indicate instructions for performing the method according to any one of the first aspect or the possible implementations thereof.

According to an eighth aspect, a computer storage medium is provided. The computer storage medium stores program code, and the program code is used to indicate instructions for performing the method according to any one of the second aspect or the possible implementations thereof.

According to a ninth aspect, a computer storage medium is provided. The computer storage medium stores program code, and the program code is used to indicate instructions for performing the method according to any one of the third aspect or the possible implementations thereof.

According to a tenth aspect, a computer program product including instructions is provided. When the computer program product runs on a computer, the computer is enabled to perform the method according to any one of the first aspect or the possible implementations thereof.

According to an eleventh aspect, a computer program product including instructions is provided. When the computer program product runs on a computer, the computer is enabled to perform the method according to any one of the second aspect or the possible implementations thereof.

According to a twelfth aspect, a computer program product including instructions is provided. When the computer program product runs on a computer, the computer is enabled to perform the method according to any one of the third aspect or the possible implementations thereof.

According to a thirteenth aspect, a communication system is provided. The communication system includes at least two of an apparatus having a function of implementing the methods and various possible designs according to the first aspect, an apparatus having a function of implementing the methods and various possible designs according to the second aspect, and an apparatus having a function of implementing the methods and various possible designs according to the third aspect.

According to a fourteenth aspect, a processor is provided. The processor is configured to be coupled to a memory, and is configured to perform the method according to any one of the first aspect or the possible implementations thereof.

According to a fifteenth aspect, a processor is provided. The processor is configured to be coupled to a memory, and is configured to perform the method according to any one of the second aspect or the possible implementations thereof.

According to a sixteenth aspect, a processor is provided. The processor is configured to be coupled to a memory, and is configured to perform the method according to any one of the third aspect or the possible implementations thereof.

According to a seventeenth aspect, a chip is provided. The chip includes a processor and a communication interface. The communication interface is configured to communicate with an external component or an internal component, and the processor is configured to implement the method according to any one of the first aspect or the possible implementations thereof.

Optionally, the chip may further include a memory. The memory stores instructions. The processor is configured to execute the instructions stored in the memory or instructions from another module. When the instructions are executed, the processor is configured to implement the method according to any one of the first aspect or the possible implementations thereof.

Optionally, the chip may be integrated into a terminal.

According to an eighteenth aspect, a chip is provided. The chip includes a processor and a communication interface. The communication interface is configured to communicate with an external component or an internal component, and the processor is configured to implement the method according to any one of the second aspect or the possible implementations thereof.

Optionally, the chip may further include a memory. The memory stores instructions. The processor is configured to execute the instructions stored in the memory or instructions from another module. When the instructions are executed, the processor is configured to implement the method according to any one of the second aspect or the possible implementations thereof.

Optionally, the chip may be integrated into an OAI network element.

According to a nineteenth aspect, a chip is provided. The chip includes a processor and a communication interface. The communication interface is configured to communicate with an external component or an internal component, and the processor is configured to implement the method according to any one of the third aspect or the possible implementations thereof.

Optionally, the chip may further include a memory. The memory stores instructions. The processor is configured to execute the instructions stored in the memory or instructions from another module. When the instructions are executed, the processor is configured to implement the method according to any one of the third aspect or the possible implementations thereof.

Optionally, the chip may be integrated into a network device.

Based on the foregoing technical solutions, the terminal receives the parameter configuration information, where the parameter configuration information is used to indicate the time-frequency resource required by the terminal to transmit the data and the cell that can be used by the terminal to transmit the data; and further accesses the network device based on the parameter configuration information. To be specific, the terminal may obtain, based on one piece of parameter configuration information, the time-frequency resource required to transmit the data and the cell that can be used to transmit the data, and does not need to obtain, by configuring different pieces of configuration information for a plurality of times, the time-frequency resource required to transmit the data and the cell that can be used to transmit the data. Different pieces of configuration information are carried by using different pieces of signaling in a conventional solution, while the parameter configuration information in embodiments of this application may be carried in one piece of signaling, so that signaling overheads are reduced.

### BRIEF DESCRIPTION OF DRAWINGS

FIG. 1 is a schematic diagram of a structure of a communication system according to this application;
FIG. 2 is a schematic diagram of an architecture of a distributed base station in a communication system;
FIG. 3 is a schematic flowchart of a network device access method according to an embodiment of this application;
FIG. 4 is a schematic flowchart of a network device access method according to another embodiment of this application;
FIG. 5 is a schematic block diagram of a network device access apparatus according to an embodiment of this application;
FIG. 6 is a schematic diagram of a structure of a network device access apparatus according to an embodiment of this application;
FIG. 7 is a schematic block diagram of a network device access apparatus according to an embodiment of this application;
FIG. 8 is a schematic diagram of a structure of a network device access apparatus according to an embodiment of this application;
FIG. 9 is a schematic block diagram of a network device access apparatus according to an embodiment of this application;
FIG. 10 is a schematic diagram of a structure of a network device access apparatus according to an embodiment of this application;
FIG. 11 is a schematic diagram of a structure of a communication apparatus according to an embodiment of this application;
FIG. 12 is a schematic diagram of a structure of a communication apparatus according to another embodiment of this application;
FIG. 13 is a schematic diagram of a structure of a communication apparatus according to another embodiment of this application; and
FIG. 14 is a schematic diagram of a structure of a communication apparatus according to another embodiment of this application.

### DESCRIPTION OF EMBODIMENTS

The following describes technical solutions of this application with reference to the accompanying drawings.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a 5th generation (5th generation, 5G) system or a new radio (new radio, NR) system, and a future mobile communication system.

A terminal in embodiments of this application may be a device that has a wireless transceiver function, and may be referred to as a terminal (terminal), user equipment (user equipment, UE), a mobile station (mobile station, MS), a mobile terminal (mobile terminal, MT), a vehicle-mounted terminal, a remote station, a remote terminal, or the like. A specific form of the terminal may be a mobile phone (mobile phone), a cellular phone, a cordless phone, a session initiation protocol (session initiation protocol, SIP) phone, a wearable device, a tablet computer (pad), a desktop computer, a notebook computer, a stand-alone computer, a vehicle-mounted terminal, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal in a future 5G network, or a terminal in a future evolved PLMN, or the like.

In addition, the terminal may be used in the following scenario: virtual reality (virtual reality, VR), augmented reality (augmented reality, AR), industrial control (industrial control), self driving (self driving), remote medical surgery (remote medical surgery), a smart grid (smart grid), transportation safety (transportation safety), a smart city (smart city), a smart home (smart home), or the like. The terminal may be fixed or movable. It should be noted that the terminal may support at least one wireless communication technology, for example, LTE, NR, or wideband code division multiple access (wideband code division multiple access, WCDMA).

A network device in embodiments of this application may be a device that provides a wireless communication function for the terminal, and may also be referred to as a radio access network (radio access network, RAN) device or the like. The network device includes but is not limited to: a next generation NodeB (next generation NodeB, gNB) in 5G, an evolved NodeB (evolved NodeB, eNB), a baseband unit (baseband unit, BBU), a transmission reception point (transmission reception point, TRP), a transmission point (transmission point, TP), a relay station, an access point, and the like. Alternatively, the network device may be a radio controller in a cloud radio access network (cloud radio access network, CRAN) scenario, or the like. In addition, the network device may further be responsible for functions such as radio resource management, quality of service (quality of service, QoS) management, and data compression and encryption on an air interface side. The network device may support at least one wireless communication technology, for example, LTE or NR.

In some deployments, the gNB may include a central unit (central unit, CU) and a distributed unit (distributed unit, DU). The gNB may further include an active antenna unit (active antenna unit, AAU). The CU implements some functions of the gNB, and the DU implements some functions of the gNB. For example, the CU is responsible for processing a non-real-time protocol and service, and implementing functions of a radio resource control (radio resource control, RRC) layer and a packet data convergence protocol (packet data convergence protocol, PDCP) layer. The DU is responsible for processing a physical layer protocol and a real-time service, and implementing functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer eventually becomes information at the PHY layer, or is changed from information at the PHY layer. Therefore, in this architecture, higher layer signaling such as RRC layer signaling may also be considered as being sent by the DU or sent by the DU and the AAU. It may be understood that the network device may be a device including one or more of a CU node, a DU node, and an AAU node. In addition, the CU may be classified as a network device in an access network (radio access network, RAN), or may be classified as a network device in a core network (core network, CN). This is not limited in this application.

In embodiments of this application, the terminal or the network device includes a hardware layer, an operating system layer running above the hardware layer, and an application layer running above the operating system layer. The hardware layer includes hardware such as a central processing unit (central processing unit, CPU), a memory management unit (memory management unit, MMU), and a memory (which is also referred to as a main memory). An operating system may be any one or more of computer operating systems implementing service processing through a process (process), for example, a Linux operating system, a Unix operating system, an Android operating system, an iOS operating system, and a Windows operating system. The application layer includes applications such as a browser, an address book, word processing software, and instant communication software. In addition, a specific structure of an execution body of a method provided in embodiments of this application is not specifically limited in embodiments of this application, provided that a program that records code of the method provided in embodiments of this application can be run to perform communication according to the method provided in embodiments of this application. For example, the execution body of the method provided in embodiments of this application may be the terminal or the network device, or may be a functional module that can invoke the program and execute the program in the terminal or the network device.

In addition, aspects or features of this application may be implemented as a method, an apparatus or a product that uses standard programming and/or engineering technologies. For example, a computer-readable medium may include but is not limited to: a magnetic storage component (for example, a hard disk, a floppy disk, or a magnetic tape), an optical disc (for example, a compact disc (compact disc, CD) or a digital versatile disc (digital versatile disc, DVD)), a smart card and a flash memory component (for example, an erasable programmable read-only memory (erasable programmable read-only memory, EPROM), a card, a stick, or a key drive). In addition, various storage media described in this specification may indicate one or more devices and/or other machine-readable media that are configured to store information. The term "machine-readable media" may include but is not limited to a radio channel, and various other media that can store, contain, and/or carry instructions and/or data.

It may be understood that the network device and the terminal may be deployed on land, including indoor or outdoor and handheld or vehicle-mounted devices and terminals, or may be deployed on water, or may be deployed on an airplane, a balloon, or a satellite in the air. An application scenario of the radio access network device and the terminal is not limited in embodiments of this application.

A core network device may be an access and mobility management function (access and mobility management function, AMF), and is responsible for functions such as access control, mobility management (mobility management, MM), attachment and detachment, and gateway selection. The core network device in embodiments of this application is not limited to the AMF.

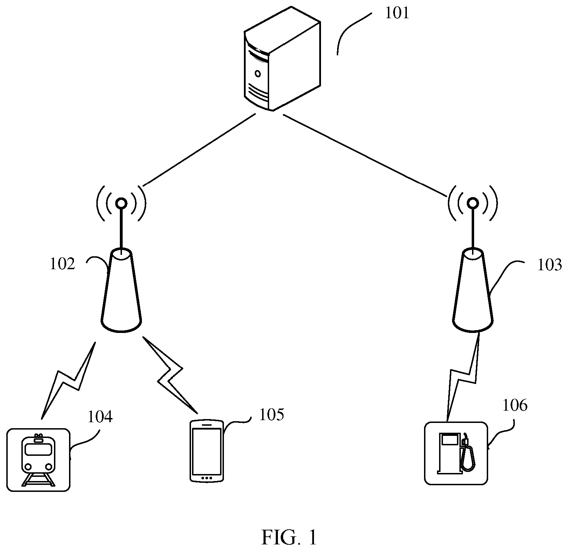

FIG. 1 is a schematic diagram of an architecture of a communication system. The communication system includes a core network device 101, base stations (a base station 102 and a base station 103 shown in FIG. 1), and terminals (a terminal 104, a terminal 105, and a terminal 106 shown in FIG. 1). As shown in FIG. 1, it can be learned that a base station may be connected to at least one terminal. For example, the base station 102 is separately connected to the terminal 104 and the terminal 105, and the base station 103 is connected to the terminal 106. The base station may be connected to at least one core network device. For example, the base station 102 and the base station 103 are connected to the core network device 101.

There is a communication interface between the core network device 101 and the base station 102 and a communication interface between the core network device 101 and the base station 103. In this way, the core network device 101 can communicate with the base station 102 and the base station 103. For example, the communication interface is referred to as an N2 interface or an NG interface in this application.

If there is a communication interface between the base station 102 and the base station 103, the base station 102 and the base station 103 can directly communicate with each other. Direct communication herein means that the two base stations may not need to communicate with each other through the core network device or another device. For example, the communication interface between the base station 102 and the base station 103 may be referred to as an Xn interface.

If there is no communication interface between the base station 102 and the base station 103, the base station 102 and the base station 103 cannot directly communicate with each other. In a possible manner, the two base stations having no communication interface may communicate with each other through the core network device.

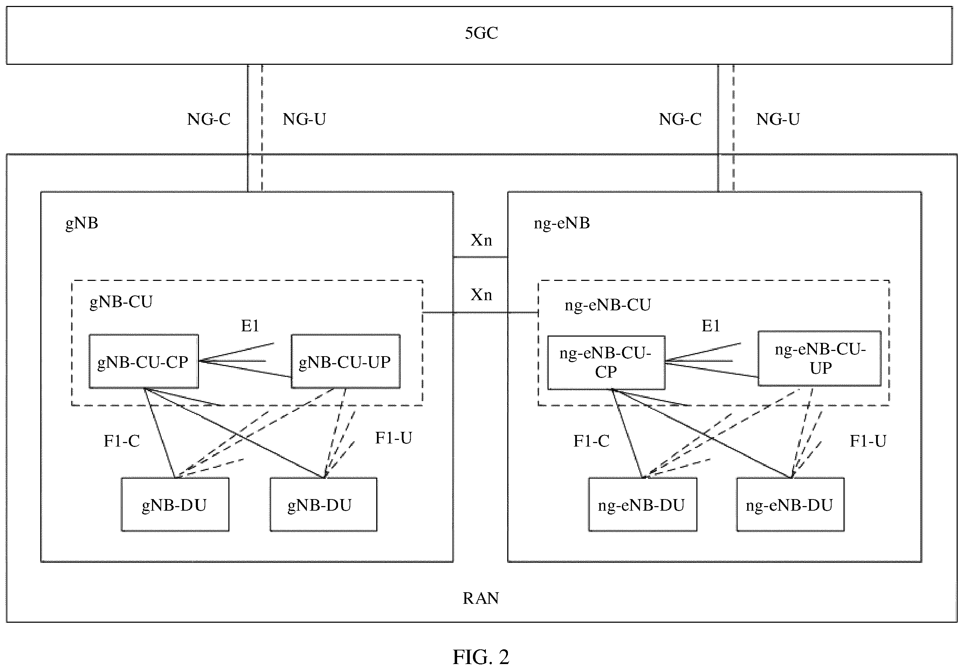

FIG. 2 is a schematic diagram of an architecture of a base station in which a CU and a DU are separated in a 5G communication system. As shown in FIG. 2, the 5G communication system includes a 5G core (5G core, 5GC) and a next generation radio access network (next generation radio access network, NG-RAN) node connected to the 5GC. The NG-RAN node may be a gNB or a next generation-evolved NodeB (next generation-evolved NodeB, ng-eNB). The gNB provides a user plane function and a control plane function of NR for a terminal, and the ng-eNB provides a user plane function and a control plane function of evolved universal terrestrial radio access (evolved universal terrestrial radio access, E-UTRA) for the terminal. It should be noted that, the gNB and the ng-eNB are merely names, are used to indicate base stations that support a 5G network system, and are not intended for limitation. The NG-RAN node may be connected to the 5GC through an NG-C (next generation control) interface and an NG-U (next generation user) interface. For ease of description, FIG. 2 shows only one gNB and one ng-eNB.

Optionally, gNBs, the gNB and the ng-eNB, or the ng-eNBs may be connected through an Xn interface. One gNB or ng-eNB may include one CU and one or more DUs. For example, one gNB or ng-eNB shown in FIG. 2 includes one CU and two DUs. Further, one CU may include one central unit-control plane (CU-control plane, CU-CP) and one or more central unit-user planes (CU-user plane, CU-UP). The CU may be connected to the DU through an F1 interface, the CU-CP may be connected to the CU-UP through an E1 interface, the CU-CP may be connected to the DU through an F1 control plane interface (F1-C), and the CU-UP may be connected to the DU through an F1 user plane interface (F1-U).

As shown in FIG. 2, a solid line represents control plane transmission, and a dashed line represents user plane transmission. Functions of the CU and the DU may be classified based on a protocol stack. In a possible manner, a radio resource control (radio resource control, RRC) layer, a packet data convergence protocol (packet data convergence protocol, PDCP) layer, and a service data adaptation protocol (service data adaptation protocol, SDAP) layer are deployed on the CU. A radio link layer control protocol (radio link control, RLC) layer, a media access control (media access control, MAC) layer, and a physical layer (physical layer, PHY) are deployed on the DU. Correspondingly, the CU is capable of processing the RRC, the PDCP, and the SDAP. The DU is capable of processing the RLC, the MAC, and the PHY. It should be noted that the foregoing function classification is only an example, and there may alternatively be another classification manner. For example, the CU is capable of processing the RRC, the PDCP, the RLC, and the SDAP, and the DU is capable of processing the MAC, and the PHY. For another example, the CU is capable of processing the RRC, the PDCP, the RLC, the SDAP, and a part of the MAC (for example, adding a MAC header), and the DU is capable of processing the PHY and a part of the MAC (for example, scheduling).

It may be understood that names of the CU and the DU may change, and any network device that can implement the foregoing functions may be considered as the CU and the DU in this application. The CU-CP has a control plane function of the CU, for example, is capable of processing the RRC and a PDCP control plane. The CU-UP has a user plane function of the CU, for example, is capable of processing the SDAP and a PDCP user plane. In other words, steps performed by the access network device in embodiments of this application may be performed by the base station, the CU, the CU-CP, or the CU-UP. This is not limited in this application.

The following describes terms used in this application.

### Cell search:

After a terminal is powered on, the terminal in an initial state cannot learn of a downlink configuration of a cell. In this case, the terminal obtains settings of a network device by using a synchronization signal, to achieve frequency and symbol synchronization with the cell, obtain a start location of a downlink frame, and determine a physical cell identifier of the cell. To support mobility, the terminal continuously searches for a neighboring cell, achieves synchronization, and estimates receive quality of a signal in the cell, to determine whether to perform handover or cell reselection. Specifically, the terminal obtains reference time by using a synchronization signal sent by the network device, obtains frame synchronization and a physical layer cell group by using a secondary synchronization signal sent by the network device, and obtains a physical cell identifier by using a downlink reference signal sent by the network device. In this way, the terminal may read system information on a broadcast channel based on the obtained frame synchronization and the obtained physical cell identifier, to obtain other cell information.

### PLMN selection:

Before accessing the network device, the terminal needs to select an appropriate PLMN and select an appropriate cell. Specifically, the terminal scans all frequency bands within frequency bands supported by the terminal, and on each carrier, the terminal searches for a cell with a strongest signal and reads a system message, to find a PLMN to which the cell belongs. The terminal may attempt to register with the PLMN by using related PLMN selection information stored on a universal subscriber identity module (universal subscriber identity module, USIM) card.

### Cell selection:

In a cell search procedure, the terminal completes downlink synchronization and decodes a necessary system message. In this case, the terminal needs camp on the cell or a neighboring cell. This procedure is implemented through a cell selection procedure, and the terminal strives to find a cell with optimal signal quality. Specifically, the terminal measures a reference signal received power (reference signal received power, RSRP) of a radio channel, calculates a measurement cell received level value for each cell, then obtains another cell parameter and a related minimum level requirement of the cell from the system message, and therefore calculates a cell selection received level value for each cell. If the cell selection received level value is greater than 0, the cell is considered as a candidate cell and a cell with a maximum positive value is selected as a camped cell. After camping on the cell, the terminal starts a random access procedure.

### Random access:

After the cell selection procedure, the terminal has achieved the downlink synchronization with the cell. Therefore, the terminal can receive downlink data, but the terminal can perform uplink transmission only after achieving uplink synchronization with the cell. Specifically, the terminal may establish a connection to the cell by using the random access procedure (random access procedure), and achieve the uplink synchronization. The random access may be a four-step random access type, or may be a two-step random access type.

For example, a four-step random access procedure includes: The terminal sends a message 1 (message 1, msg 1), namely, a random access preamble (preamble), to the network device. After detecting the random access preamble, the network device returns a response message, namely, a message 2 (message 2), to the terminal. The message 2 includes an uplink resource allocated by the network device to the terminal. After receiving the message 2, the terminal sends a message 3 on the uplink resource indicated by the message 2. If the network device can correctly decode the message 3 (message 3), the network device returns a message 4 (message 4) to the terminal, where the message 4 is used to notify the terminal that contention succeeds. After the foregoing four steps, the random access procedure succeeds.

For another example, a two-step random access procedure includes: The terminal includes both a random access preamble and data (namely, a preamble and data) in a message A. A data part is used for contention resolution, for example, an RRC message. If there is no conflict between terminals, the network device returns a message B to the terminal after successfully decoding the message A. The message B includes both a response to the random access preamble and a response to the data. The response to the random access preamble is a random access response (random access response, RAR). The response to the data is usually an RRC message. The two responses may be sent simultaneously, or may be sent successively. The terminal may separately decode the two responses. After receiving the message B, the terminal learns that random access succeeds. If there is a conflict between the terminal s, the network device may fail to obtain the data in the message A through decoding. In this case, the network device does not send the message B to the terminal. After sending the message 1, the terminal waits for a time window. If the terminal does not receive the message B, it considers that random access fails.

In a conventional solution, the terminal needs to access the network device through procedures such as cell search, PLMN selection, cell selection, and random access, to implement access to the network device. In other words, the terminal needs to perform exchange of a large amount of signaling to obtain various parameter configurations required for accessing the network device. Consequently, signaling overheads of the terminal are high.

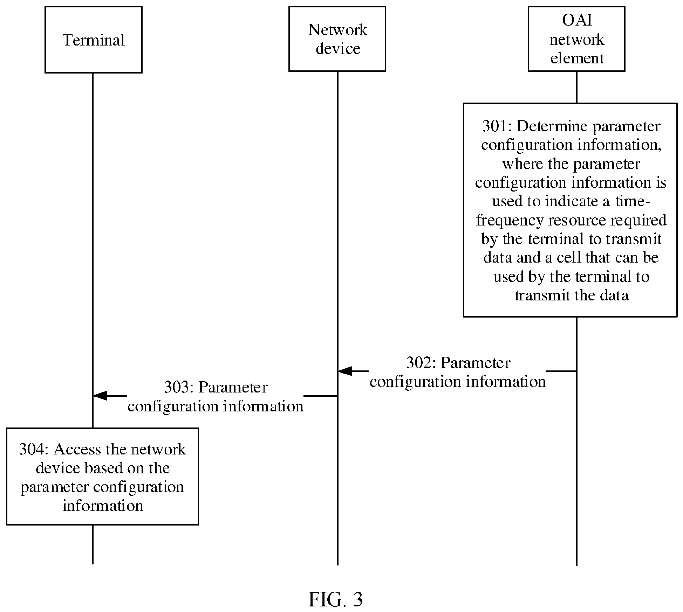

FIG. 3 is a schematic flowchart of a network device access method according to an embodiment of this application.

It should be noted that an operation assistance information (operation assistance information, OAI) network element in this embodiment of this application may be an independent network element, or may be a module in a core network element, or may be a module in an access network device. For ease of description, an example in which the OAI network element is an independent network element is used for description in the embodiment shown in FIG. 3. However, this application is not limited thereto.

301: The OAI network element determines parameter configuration information, where the parameter configuration information is used to indicate a time-frequency resource required by a terminal to transmit data and a cell that can be used by the terminal to transmit the data.

Specifically, the OAI network element may determine the parameter configuration information, where the parameter configuration information may be used to indicate the time-frequency resource required by the terminal to transmit the data and the cell that can be used by the terminal to transmit the data.

Optionally, the parameter configuration information may further include a time-frequency resource required by the terminal to receive data and a cell that can be used by the terminal to receive the data.

Optionally, the cell that can be used by the terminal to transmit or receive the data includes a cell global identifier (cell global identifier, CGI).

Optionally, the cell that can be used by the terminal to transmit or receive the data may further include a PLMN identifier.

Optionally, the parameter configuration information may further include at least one of the following: a power required by the terminal to transmit the data, a quantity of terminals that can be supported by the cell that can be used by the terminal to transmit the data, and a timing advance (timing advance) required by the terminal to transmit the data.

It may be understood that the parameter configuration information may further include another parameter used for accessing a network device. This is not limited in this application.

In an embodiment, before step 301, the OAI network element may receive area information of the terminal from an AMF network element. In this way, the OAI network element may determine the parameter configuration information based on the area information.

Specifically, the OAI network element may obtain the area information of the terminal from the AMF network element, and further configure the parameter configuration information for the terminal based on the area information. In other words, the OAI network element may configure different pieces of parameter configuration information for terminals in different areas.

Optionally, the AMF network element may actively send the area information to the OAI network element.

Optionally, when receiving a registration request of the terminal, the AMF network element may send the area information to the OAI network element.

Specifically, the terminal may send the registration request to the AMF network element during initial registration, mobility registration update, periodic registration update, or emergency registration. When receiving the registration request, the AMF network element sends the area information to the OAI network element, so that the OAI network element can configure the parameter configuration information for the terminal based on the area information.

In another embodiment, before step 301, the OAI network element may receive a measurement result from an access network device, where the measurement result includes area information of the terminal.

Specifically, the access network device obtains minimization of drive tests (minimization of drive tests, MDT) configuration information, and sends the MDT configuration information to the terminal. The terminal receives the MDT configuration information, and performs MDT measurement based on the MDT configuration information, to obtain the measurement result, where the measurement result may include the area information of the terminal. The terminal sends the measurement result to the OAI network element, so that the OAI network element can determine the parameter configuration information for the terminal based on the area information.

The terminal may perform MDT measurement and report the measurement result in two manners. In one manner, the terminal records the MDT configuration information, and performs MDT measurement when the terminal is in an RRC idle state or in an inactive state. The terminal stores the measurement result, and sends the measurement result to the OAI network element when the terminal is in an RRC connected state. In the other manner, the terminal performs MDT measurement in real time, that is, the terminal may perform MDT measurement when the terminal is in an RRC connected state. When the measurement result meets a reporting condition, the terminal sends the measurement result to the OAI network element.

It may be understood that the reporting condition may be preconfigured.

Optionally, the measurement result may further include at least one of a carrier frequency of a serving cell, a physical cell identifier (physical cell identifier, PCI) of the serving cell, an RSRP of the serving cell, reference signal received quality (reference signal received quality, RSRQ) of the serving cell, a carrier frequency of a neighboring cell, a PCI of the neighboring cell, an RSRP of the neighboring cell, RSRQ of the neighboring cell, a time stamp (time stamp), a radio access technology used by the terminal, a channel quality indicator (channel quality indicator, CQI), a signal-to-noise ratio (signal-to-noise ratio, SNR), band information, power amplification information, a quantity of failed call attempts, a call drop rate, a handover failure probability, a radio link failure, random access information, specific location information of the terminal that does not detect network coverage, an uplink throughput, a downlink throughput, a latency, a jitter, a packet loss rate, and application information.

Specifically, the carrier frequency may be an absolute radio frequency channel number (absolute radio frequency channel number, ARFCN).

The time stamp may be used to indicate time at which MDT measurement is performed, and the time may be absolute time or relative time. The absolute time is a specific moment at which MDT measurement is performed. The relative time is a moment at which the terminal performs MDT measurement relative to a moment at which the terminal receives the MDT configuration information. For example, time at which the terminal receives the MDT configuration information is 2019-07-22 12:00:00, and time at which MDT measurement is performed is 2019-07-22 13:23:45. In this case, the absolute time is 2019-07-22 13:23:45, and the relative time may be 01:23:45.

The radio access technology used by the terminal may be an NR access technology, an E-UTRA access technology, a WLAN access technology, a Bluetooth access technology, a dual connectivity access technology, or another radio access technology. This is not limited in this application.

The CQI is used to indicate channel quality. For example, the channel quality is quantized as 0 to 15. A larger value indicates a higher modulation and coding scheme, higher efficiency, and a higher provided downlink peak throughput. Correspondingly, the channel quality is better.

The SNR is used to measure impact of noise on a signal. A larger value indicates smaller noise in the signal and higher quality.

The band information is used to indicate a band that can be detected by the terminal.

The power amplification information is used to indicate a capability of the terminal to convert a lowpower radio frequency signal into a higher-power signal.

The quantity of failed call attempts is used to indicate a quantity of failed calls when the terminal initiates call attempts in a cell.

The call drop rate is used to indicate a probability of communication interruption of the terminal in a cell.

The handover failure probability is used to indicate a probability of a handover failure of the terminal.

The radio link failure is used to indicate a CGI, a PCI, a carrier frequency, and the like of a cell in which the radio link failure of the terminal occurs.

The random access information is used to indicate random access failure information of the terminal in a random access procedure in a cell. Specifically, the random access information includes information about a quantity of times of sending a preamble (preamble) by the terminal in the random access procedure in the cell and information about whether the terminal detects contention. The information about the quantity of times of sending the preamble by the terminal is used to indicate a quantity of times of sending the preamble by the terminal when the terminal successfully completes the random access procedure most recently. For example, if the terminal fails to complete the random access procedure for the first nine times and successfully completes the random access procedure for the tenth time, the quantity of times of sending the preamble by the terminal is 10. The information about whether the terminal detects contention is used to indicate whether the terminal detects existence of contention on at least one preamble in sent preambles.

The uplink throughput or the downlink throughput is used to indicate an amount of data (measured in bits, bytes, packets, or the like) successfully transmitted by the terminal within unit time in a cell.

The latency, the jitter, and the packet loss rate are used to indicate a data packet transmission latency, a jitter, and a packet loss rate of the terminal in a cell.

The application information is used to indicate an application obtained by the terminal in a cell.

It may be understood that information included in the measurement result may be information specific to a cell, or may be information specific to a synchronization signal and physical broadcast channel block (synchronization signal and physical broadcast channel block, SSB). The SSB includes a primary synchronization signal (primary synchronization signal, PSS), a secondary synchronization signal (secondary synchronization signal, SSS), and a physical broadcast channel (physical broadcast channel, PBCH), and occupies four symbols in time domain and 240 subcarriers in frequency domain. At different moments, in a cell corresponding to the SSB, SSBs may be sent through different beams, and SSBs sent on a plurality of beams are referred to as one SSB set. An SSB sent on each beam is uniquely identified by using an SSB index (SSB index). In other words, in an SSB set, an SSB sent on each beam has a unique SSB index. Within a frequency range of a carrier, a plurality of SSBs may be transmitted, each SSB corresponds to one PCI, and PCIs corresponding to these SSBs may be the same or different. The terminal may obtain the PCI and uplink synchronization by using the PSS. The terminal may obtain a cyclic prefix (cyclic prefix, CP) length, a physical cell group identifier (ID), and frame synchronization by using the SSS. The terminal can obtain a master information block (master information block, MIB) by decoding the PBCH, where the MIB includes configuration information of a quantity of common antenna ports, configuration information of a system frame number (system frame number, SFN), configuration information of a downlink system bandwidth, and configuration information of physical hybrid automatic repeat request indicator channel (physical hybrid automatic repeat request indicator channel, PHICH). Specifically, when one SSB is associated with remaining minimum system information (remaining minimum system information, RMSI), the SSB corresponds to an independent cell, and the cell has a unique NR cell global identifier (NR cell global identifier, NCGI). In this case, such an SSB is referred to as a cell-defining SSB (cell-defining SSB, CD-SSB). Only the CD-SSB can be used to send a MIB message and a system information block 1 (system information block 1, SIB1) message, and the terminal performs access based only on a synchronization signal of the CD-SSB when performing cell selection. Another SSB can be used to send only a MIB message but cannot be used to send a SIB1 message.

It may be further understood that a type of the SSB is not limited in this embodiment of this application, for example, the CD-SSB and a non-CD-SSB, and there may alternatively be another type of SSB.

To be specific, in this embodiment of this application, the OAI network element determines the parameter configuration information, where the parameter configuration information is used to indicate the time-frequency resource required by the terminal to transmit the data and an SSB that can be used by the terminal to transmit the data. Optionally, the parameter configuration information may be further used to indicate the time-frequency resource required by the terminal to receive the data and an SSB that can be used by the terminal to receive the data. In this case, the SSB that can be used by the terminal to transmit or receive the data includes an SSB index (index) of the SSB.

Optionally, the MDT configuration information may be used to indicate at least one of measurement duration, a measurement range, and a measurement reporting interval of the terminal.

Specifically, the measurement range may be a CGI or a tracking area code (tracking area code, TAC).

Optionally, the access network device may specifically receive the MDT configuration information from an operation, administration and maintenance (operation, administration and maintenance, OAM) network element, or may receive the MDT configuration information from the AMF network element.

Optionally, before receiving the parameter configuration information, the terminal may send trigger information, where the trigger information is used to trigger the OAI network element to send the parameter configuration information.

Specifically, the terminal may send the trigger information to the OAI network element. After receiving the trigger information, the OAI network element may configure the parameter configuration information for the terminal. This avoids a case in which the OAI network element configures the parameter configuration information for the terminal when the terminal does not need the parameter configuration information, so that resource overheads are reduced.

It may be understood that the trigger information may alternatively be capability information. For example, the capability information includes auxiliary data used to generate the parameter configuration information.

Optionally, the area information is used to indicate a location of the terminal.

Specifically, the area information may be used to indicate a specific location of the terminal. To be specific, the OAI network element may configure different pieces of parameter configuration information for the terminal based on the location of the terminal. For example, the area information may include global navigation satellite system (global navigation satellite system, GNSS) location information, a tracking area identifier, a CGI, and a node ID of the network device.

Optionally, the area information may be used to indicate a historical movement track or an expected movement track of the terminal.

Specifically, the OAI network element may predict the location of the terminal based on the historical movement track or the expected movement track of the terminal, and further determine the parameter configuration information, or may determine the configuration information based on the location of the terminal and the historical movement track of the terminal, or may determine the parameter configuration information based on the expected movement track of the terminal, or may determine the parameter configuration information based on the current location of the terminal, the historical movement track of the terminal, and the expected movement track of the terminal.

Optionally, the area information may be further used to indicate at least one of a radio capability, a quality of service requirement, and access control information of the terminal.

Specifically, the radio capability of the terminal is a type of a radio access technology supported by the terminal, for example, NR, E-UTRA, and dual connectivity. The quality of service requirement is used to indicate quality of service required by the terminal, for example, a 5G QoS identifier (5G QoS identifier, 5QI) and a flow bit rate. The access control information of the terminal is used to indicate specific cells or specific network slices in which the terminal supports access to the network device.

302: The OAI network element sends the parameter configuration information to the network device. Correspondingly, the network device receives the parameter configuration information from the OAI network element.

Specifically, the OAI network element may directly send the parameter configuration information to the network device. Alternatively, the OAI network element may first send the parameter configuration information to the AMF, and then the AMF forwards the parameter configuration information to the network device. The parameter configuration information may be carried in a message for sending. To be specific, compared with a conventional solution in which the network device needs to configure content in the parameter configuration information through a plurality of times of signaling transmission, in step 302, the content in the parameter configuration information is configured by using one message, that is, only one time of signaling transmission is required.

It may be understood that the network device shown in FIG. 3 may be the access network device, or may be the AMF network element and the access network device.

303: The network device sends the parameter configuration information to the terminal. Correspondingly, the terminal receives the parameter configuration information from the network device.

It may be understood that, that the network device sends the parameter configuration information to the terminal includes: The network device is the access network device, and the access network device directly sends the parameter configuration information to the terminal. For example, the parameter configuration information is carried in system information.

It may be further understood that, that the network device sends the parameter configuration information to the terminal includes: After receiving the parameter configuration information, the AMF network element may directly forward the parameter configuration information to the terminal. For example, the parameter configuration information is carried in a NAS message.

304: The terminal accesses the network device based on the parameter configuration information.

Specifically, the terminal receives the parameter configuration information, where the parameter configuration information is used to indicate the time-frequency resource required by the terminal to transmit the data and the cell that can be used by the terminal to transmit the data; and further accesses the network device based on the parameter configuration information. To be specific, the terminal may obtain, at a time, the time-frequency resource required to transmit the data and the cell that can be used to transmit the data, and does not need to obtain, through a plurality of times of signaling exchange, the time-frequency resource required to transmit the data and the cell that can be used to transmit the data, so that signaling overheads are reduced.

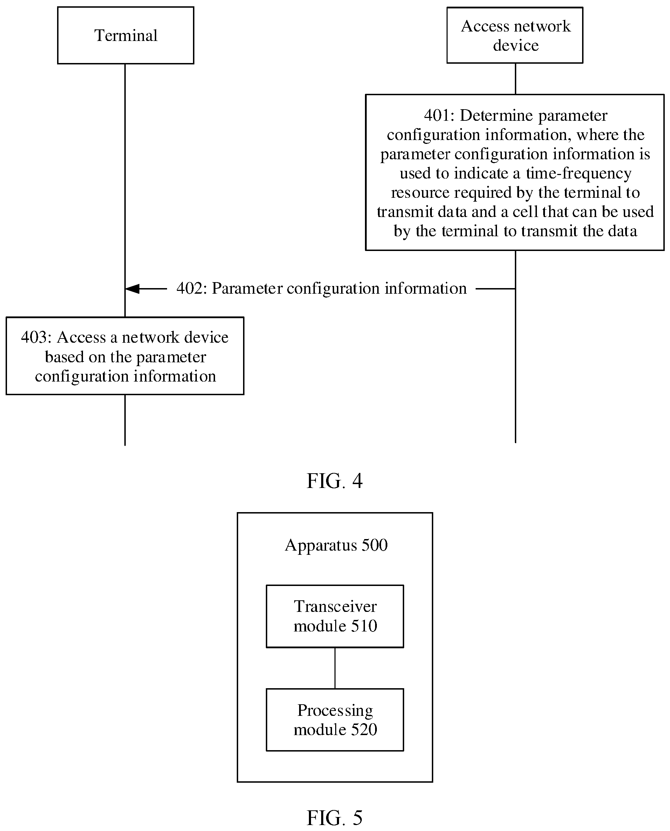

FIG. 4 is a schematic flowchart of a network device access method according to another embodiment of this application.

It should be noted that, unless otherwise particularly specified, same terms in the embodiment shown in FIG. 4 and the embodiment shown in FIG. 3 indicate same meanings. To avoid repetition, details are not described herein again.

401: An access network device determines parameter configuration information, where the parameter configuration information is used to indicate a time-frequency resource required by a terminal to transmit data and a cell used by the terminal.

Specifically, an OAI network element may be the access network device. In other words, step 401 may be performed by the access network device, or may be specifically a module in the access network device.

Optionally, step 401 may be specifically: The access network device receives area information of the terminal from an AMF, and determines the parameter configuration information based on the area information.

Optionally, the AMF may actively send the area information to the access network device.

Optionally, after receiving a registration request sent by the terminal, the AMF may send the area information to the access network device.

402: The access network device sends the parameter configuration information to the terminal.

403: The terminal accesses a network device based on the parameter configuration information.

Specifically, the terminal receives the parameter configuration information from the access network device, where the parameter configuration information is used to indicate the time-frequency resource required by the terminal to transmit the data and the cell that can be used by the terminal to transmit the data; and further accesses the network device based on the parameter configuration information. To be specific, the terminal may obtain, at a time, the time-frequency resource required to transmit the data and the cell that can be used to transmit the data, and does not need to obtain, through a plurality of times of signaling exchange, the time-frequency resource required to transmit the data and the cell that can be used to transmit the data, so that signaling overheads are reduced.

Embodiments described in this specification may be independent solutions, or may be combined based on internal logic. All these solutions fall within the protection scope of this application.

It may be understood that, in the foregoing method embodiments, the method and the operation that are implemented by the terminal may alternatively be implemented by a component (for example, a chip or a circuit) that may be used in the terminal, the method and the operation that are implemented by the access network device may alternatively be implemented by a component (for example, a chip or a circuit) that may be used in the access network device, and the method and the operation that are implemented by the OAI network element may alternatively be implemented by a component (for example, a chip or a circuit) that may be used in the OAI network element. The scope of protection is defined by the appended claims.

The foregoing mainly describes the solutions provided in embodiments of this application from a perspective of interaction. It may be understood that, to implement the foregoing functions, each network element, such as a terminal or an access network device, includes a corresponding hardware structure and/or software module for performing each function. A person skilled in the art may be aware that, with reference to the examples described in embodiments disclosed in this specification, units and algorithm steps can be implemented by hardware or a combination of computer software and hardware in this application. Whether a function is performed by hardware or hardware driven by computer software depends on particular applications and design constraint conditions of the technical solutions. A person skilled in the art may use different methods to implement the described functions for each particular application, and where the scope of protection is defined by the appended claims.

In embodiments of this application, functional modules of the terminal, the access network device, and the OAI network element may be obtained through division based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that module division in embodiments of this application is an example and is merely logical function division. During actual implementation, there may be another division manner. An example in which each functional module is obtained through division based on a corresponding function is used below for description.

It should be understood that specific examples in embodiments of this application are merely intended to help a person skilled in the art better understand embodiments of this application, but are not intended to limit the scope of embodiments of this application.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

The foregoing describes in detail the methods provided in embodiments of this application with reference to FIG. 3 and FIG. 4. The following describes in detail apparatuses provided in embodiments of this application with reference to FIG. 5 to FIG. 14. It should be understood that descriptions of the apparatus embodiments correspond to the descriptions of the method embodiments. Therefore, for content that is not described in detail, refer to the foregoing method embodiments. For brevity, details are not described herein again.

FIG. 5 is a schematic block diagram of a network device access apparatus 500 according to an embodiment of this application.

It should be understood that the apparatus 500 may correspond to the terminal in the embodiment shown in FIG. 3 or FIG. 4, and may have any function of the terminal in the method. The apparatus 500 includes a transceiver module 510 and a processing module 520.

The transceiver module 510 is configured to receive parameter configuration information, where the parameter configuration information is used to indicate a time-frequency resource required by the terminal to transmit data and a cell that can be used by the terminal to transmit the data.

The processing module 520 is configured to access a network device based on the parameter configuration information.

Optionally, the transceiver module 510 is further configured to receive minimization of drive tests MDT configuration information. The processing module is further configured to perform MDT measurement based on the MDT configuration information, to obtain a measurement result, where the measurement result includes area information of the terminal. The transceiver module is further configured to send the measurement result.

Optionally, the transceiver module 510 is further configured to send trigger information, where the trigger information is used to trigger an operation assistance information OAI network element to send the parameter configuration information.

Optionally, the area information is used to indicate a location of the terminal.

Optionally, the area information is used to indicate a historical movement track or an expected movement track of the terminal.

Therefore, the network device access apparatus in this embodiment of this application receives the parameter configuration information, where the parameter configuration information is used to indicate the time-frequency resource required by the terminal to transmit the data and the cell that can be used by the terminal to transmit the data; and further accesses the network device based on the parameter configuration information. To be specific, the terminal may obtain, at a time, the time-frequency resource required to transmit the data and the cell that can be used to transmit the data, and does not need to obtain, through a plurality of times of signaling exchange, the time-frequency resource required to transmit the data and the cell that can be used to transmit the data, so that signaling overheads are reduced.

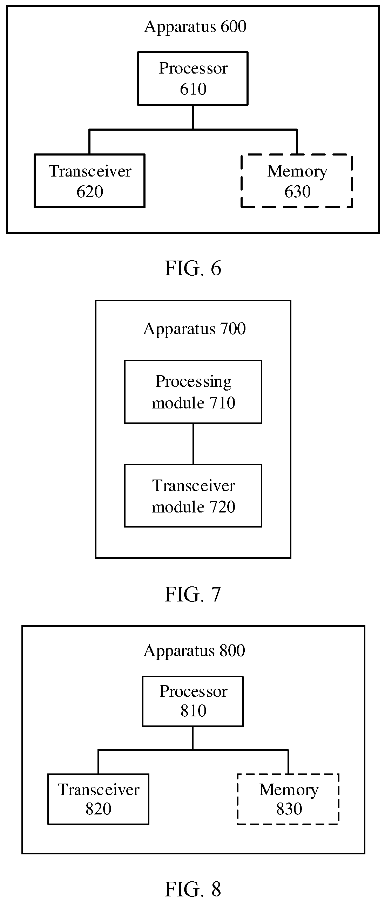

FIG. 6 shows a network device access apparatus 600 according to an embodiment of this application. The apparatus 600 may be the terminal in FIG. 3 or FIG. 4. The apparatus may use a hardware architecture shown in FIG. 6. The apparatus may include a processor 610 and a transceiver 620. Optionally, the apparatus may further include a memory 630. The processor 610, the transceiver 620, and the memory 630 communicate with each other through an internal connection path. Related functions implemented by the processing module 520 in FIG. 5 may be implemented by the processor 610. Related functions implemented by the transceiver module 510 may be implemented by the processor 610 by controlling the transceiver 620.

Optionally, the processor 610 may be a general-purpose central processing unit (central processing unit, CPU), a microprocessor, an application-specific integrated circuit (application-specific integrated circuit, ASIC), a special-purpose processor, or one or more integrated circuits configured to perform the technical solutions in embodiments of this application. Alternatively, the processor may be one or more devices, circuits, and/or processing cores for processing data (for example, computer program instructions). For example, the processor may be a baseband processor or a central processing unit. The baseband processor may be configured to process a communication protocol and communication data, and the central processing unit may be configured to: control the network device access apparatus (for example, a base station, a terminal, or a chip), execute a software program, and process data of the software program.

Optionally, the processor 610 may include one or more processors, for example, include one or more central processing units (central processing units, CPUs). When the processor is one CPU, the CPU may be a singlecore CPU, or may be a multi-core CPU.

The transceiver 620 is configured to: send data and/or a signal, and receive data and/or a signal. The transceiver may include a transmitter and a receiver. The transmitter is configured to send data and/or a signal, and the receiver is configured to receive data and/or a signal.

The memory 630 includes but is not limited to a random access memory (random access memory, RAM), a read-only memory (read-only memory, ROM), an erasable programmable read-only memory (erasable programmable read-only memory, EPROM), and a compact disc read-only memory (compact disc read-only memory, CD-ROM). The memory 630 is configured to store related instructions and data.

The memory 630 is configured to store program code and data of the terminal, and may be a separate device or integrated into the processor 610.

Specifically, the processor 610 is configured to control the transceiver to perform information transmission with an access network device and an OAI network element. For details, refer to the descriptions in the foregoing method embodiments. Details are not described herein again.

During specific implementation, in an embodiment, the apparatus 600 may further include an output device and an input device. The output device communicates with the processor 610, and may display information in a plurality of manners. For example, the output device may be a liquid crystal display (liquid crystal display, LCD), a light emitting diode (light emitting diode, LED) display device, a cathode ray tube (cathode ray tube, CRT) display device, or a projector (projector). The input device communicates with the processor, and may receive an input of a user in a plurality of manners. For example, the input device may be a mouse, a keyboard, a touchscreen device, or a sensing device.

It may be understood that FIG. 6 shows merely a simplified design of the network device access apparatus. During actual application, the apparatus may further include other necessary components, including but not limited to any quantity of transceivers, processors, controllers, memories, and the like, and all terminals that can implement this application shall fall within the protection scope of this application.

In a possible design, the apparatus 600 may be a chip, for example, may be a communication chip that can be used in the terminal, and configured to implement a related function of the processor 610 in the terminal. The chip may be a field programmable gate array, a dedicated integrated chip, a system chip, a central processing unit, a network processor, a digital signal processing circuit, or a microcontroller for implementing the related function, or may be a programmable controller or another integrated chip. Optionally, the chip may include one or more memories, configured to store program code. When the code is executed, the processor is enabled to implement a corresponding function.

An embodiment of this application further provides an apparatus. The apparatus may be a terminal or a circuit. The apparatus may be configured to perform an action performed by the terminal in the foregoing method embodiments.

FIG. 7 is a schematic block diagram of a network device access apparatus 700 according to an embodiment of this application.

It should be understood that the apparatus 700 may correspond to the OAI network element in the embodiment shown in FIG. 3, or the access network device shown in FIG. 4, and may have any function of the OAI network element in the method. The apparatus 700 includes a processing module 710 and a transceiver module 720.

The processing module 710 is configured to determine parameter configuration information, where the parameter configuration information is used to indicate a time-frequency resource required by a terminal to transmit data and a cell that can be used by the terminal to transmit the data.

The transceiver module 720 is configured to send the parameter configuration information.

Optionally, the transceiver module 720 is further configured to receive a measurement result from an access network device, where the measurement result includes area information of the terminal. The processing module 710 is specifically configured to determine the parameter configuration information based on the area information of the terminal.

Optionally, the transceiver module 720 is further configured to receive area information of the terminal from an access and mobility management function AMF network element. The processing module 710 is specifically configured to determine the parameter configuration information based on the area information of the terminal.

Optionally, the area information is used to indicate a location of the terminal.

Optionally, the area information is used to indicate a historical movement track or an expected movement track of the terminal.

Therefore, the network device access apparatus in this embodiment of this application determines the parameter configuration information, where the parameter configuration information is used to indicate the time-frequency resource required by the terminal to transmit the data and the cell that can be used by the terminal to transmit the data, and sends the parameter configuration information to the terminal. The terminal accesses a network device based on the parameter configuration information. To be specific, the terminal may obtain, at a time, the time-frequency resource required to transmit the data and the cell that can be used to transmit the data, and does not need to obtain, through a plurality of times of signaling exchange, the time-frequency resource required to transmit the data and the cell that can be used to transmit the data, so that signaling overheads are reduced.

FIG. 8 shows a network device access apparatus 800 according to an embodiment of this application. The apparatus 800 may be the OAI network element in FIG. 3 or the access network device shown in FIG. 4. The apparatus may use a hardware architecture shown in FIG. 8. The apparatus may include a processor 810 and a transceiver 820. Optionally, the apparatus may further include a memory 830. The processor 810, the transceiver 820, and the memory 830 communicate with each other through an internal connection path. Related functions implemented by the processing module 710 in FIG. 7 may be implemented by the processor 810. Related functions implemented by the transceiver module 720 may be implemented by the processor 810 by controlling the transceiver 820.

Optionally, the processor 810 may be a general-purpose central processing unit (central processing unit, CPU), a microprocessor, an application-specific integrated circuit (application-specific integrated circuit, ASIC), a special-purpose processor, or one or more integrated circuits configured to perform the technical solutions in embodiments of this application. Alternatively, the processor may be one or more devices, circuits, and/or processing cores for processing data (for example, computer program instructions). For example, the processor may be a baseband processor or a central processing unit. The baseband processor may be configured to process a communication protocol and communication data, and the central processing unit may be configured to: control the network device access apparatus (for example, a base station, a terminal, or a chip), execute a software program, and process data of the software program.

Optionally, the processor 810 may include one or more processors, for example, include one or more central processing units (central processing units, CPUs). When the processor is one CPU, the CPU may be a singlecore CPU, or may be a multi-core CPU.

The transceiver 820 is configured to: send and receive data and/or a signal, and receive data and/or a signal. The transceiver may include a transmitter and a receiver. The transmitter is configured to send data and/or a signal, and the receiver is configured to receive data and/or a signal.

The memory 830 includes but is not limited to a random access memory (random access memory, RAM), a read-only memory (read-only memory, ROM), an erasable programmable read-only memory (erasable programmable read-only memory, EPROM), and a compact disc read-only memory (compact disc read-only memory, CD-ROM). The memory 830 is configured to store related instructions and data.

The memory 830 is configured to store program code and data of the OAI network element, and may be a separate device or integrated into the processor 810.

Specifically, the processor 810 is configured to control the transceiver to perform information transmission with a terminal or an access network device. For details, refer to the descriptions in the foregoing method embodiments. Details are not described herein again.

During specific implementation, in an embodiment, the apparatus 800 may further include an output device and an input device. The output device communicates with the processor 810, and may display information in a plurality of manners. For example, the output device may be a liquid crystal display (liquid crystal display, LCD), a light emitting diode (light emitting diode, LED) display device, a cathode ray tube (cathode ray tube, CRT) display device, or a projector (projector). The input device communicates with the processor, and may receive an input of a user in a plurality of manners. For example, the input device may be a mouse, a keyboard, a touchscreen device, or a sensing device.

It may be understood that FIG. 8 shows merely a simplified design of the network device access apparatus. During actual application, the apparatus may further include other necessary components, including but not limited to any quantity of transceivers, processors, controllers, memories, and the like, and all OAI network elements that can implement this application shall fall within the protection scope of this application.

In a possible design, the apparatus 800 may be a chip, for example, may be a communication chip that can be used in the OAI network element, and configured to implement a related function of the processor 810 in the OAI network element. The chip may be a field programmable gate array, a dedicated integrated chip, a system chip, a central processing unit, a network processor, a digital signal processing circuit, or a microcontroller for implementing the related function, or may be a programmable controller or another integrated chip. Optionally, the chip may include one or more memories, configured to store program code. When the code is executed, the processor is enabled to implement a corresponding function.

An embodiment of this application further provides an apparatus. The apparatus may be an OAI network element or a circuit. The apparatus may be configured to perform an action performed by the OAI network element in the foregoing method embodiments.

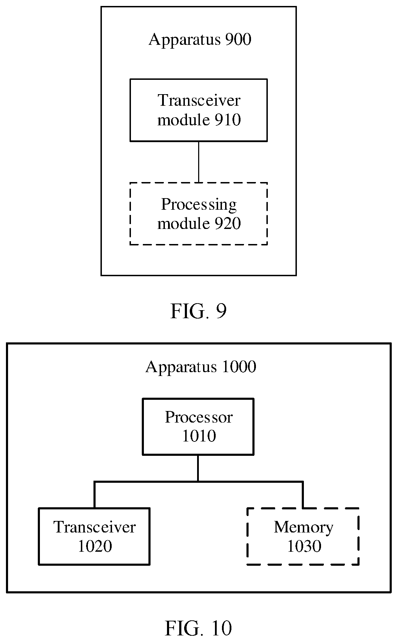

FIG. 9 is a schematic block diagram of a network device access apparatus 900 according to an embodiment of this application.

It should be understood that the apparatus 900 may correspond to the network device in the embodiment shown in FIG. 3, and may have any function of the network device in the method. The apparatus 900 includes a transceiver module 910. Optionally, the apparatus 900 may further include a processing module 920.

The transceiver module 910 is configured to receive parameter configuration information, where the parameter configuration information is used to indicate a time-frequency resource required by the terminal to transmit data and a cell that can be used by the terminal to transmit the data.

The transceiver module 910 is further configured to send the parameter configuration information to the terminal.

Optionally, the transceiver module is further configured to obtain minimization of drive tests MDT configuration information. The transceiver module 910 is further configured to send the minimization of drive tests MDT configuration information to the terminal. The transceiver module 910 is further configured to receive a measurement result from the terminal, where the measurement result is obtained by the terminal through measurement based on the MDT configuration information, and the measurement result includes area information of the terminal. The transceiver module 910 is further configured to send the measurement result to an OAI network element.

Optionally, the transceiver module 910 is specifically configured to receive the MDT configuration information from an operation, administration and maintenance OAM network element; or receive the MDT configuration information from an access and mobility management function AMF network element.

Optionally, the area information is used to indicate a location of the terminal.

Optionally, the area information is used to indicate a historical movement track or an expected movement track of the terminal.

Therefore, the network device access apparatus in this embodiment of this application receives the parameter configuration information from the OAI network element, where the parameter configuration information is used to indicate the time-frequency resource required by the terminal to transmit the data and the cell that can be used by the terminal to transmit the data, and sends the parameter configuration information to the terminal. The terminal accesses the network device based on the parameter configuration information. To be specific, the terminal may obtain, at a time, the time-frequency resource required to transmit the data and the cell that can be used to transmit the data, and does not need to obtain, through a plurality of times of signaling exchange, the time-frequency resource required to transmit the data and the cell that can be used to transmit the data, so that signaling overheads are reduced.

FIG. 10 shows a network device access apparatus 1000 according to an embodiment of this application. The apparatus 1000 may be the network device in FIG. 3. The apparatus may use a hardware architecture shown in FIG. 10. The apparatus may include a processor 1010 and a transceiver 1020. Optionally, the apparatus may further include a memory 1030. The processor 1010, the transceiver 1020, and the memory 1030 communicate with each other through an internal connection path. Related functions implemented by the processing module 920 in FIG. 9 may be implemented by the processor 1010. Related functions implemented by the transceiver module 910 may be implemented by the processor 1010 by controlling the transceiver 1020.

Optionally, the processor 1010 may be a general-purpose central processing unit (central processing unit, CPU), a microprocessor, an application-specific integrated circuit (application-specific integrated circuit, ASIC), a special-purpose processor, or one or more integrated circuits configured to perform the technical solutions in embodiments of this application. Alternatively, the processor may be one or more devices, circuits, and/or processing cores for processing data (for example, computer program instructions). For example, the processor may be a baseband processor or a central processing unit. The baseband processor may be configured to process a communication protocol and communication data, and the central processing unit may be configured to: control the network device access apparatus (for example, a base station, a terminal, or a chip), execute a software program, and process data of the software program.

Optionally, the processor 1010 may include one or more processors, for example, include one or more central processing units (central processing units, CPUs). When the processor is one CPU, the CPU may be a singlecore CPU, or may be a multi-core CPU.

The transceiver 1020 is configured to: send and receive data and/or a signal, and receive data and/or a signal. The transceiver may include a transmitter and a receiver. The transmitter is configured to send data and/or a signal, and the receiver is configured to receive data and/or a signal.

The memory 1030 includes but is not limited to a random access memory (random access memory, RAM), a read-only memory (read-only memory, ROM), an erasable programmable read-only memory (erasable programmable read-only memory, EPROM), and a compact disc read-only memory (compact disc read-only memory, CD-ROM). The memory 1030 is configured to store related instructions and data.

The memory 1030 is configured to store program code and data of the network device, and may be a separate device or integrated into the processor 1010.

Specifically, the processor 1010 is configured to control the transceiver to perform information transmission with a terminal, or an OAI network element. For details, refer to the descriptions in the foregoing method embodiments. Details are not described herein again.

During specific implementation, in an embodiment, the apparatus 1000 may further include an output device and an input device. The output device communicates with the processor 1010, and may display information in a plurality of manners. For example, the output device may be a liquid crystal display (liquid crystal display, LCD), a light emitting diode (light emitting diode, LED) display device, a cathode ray tube (cathode ray tube, CRT) display device, or a projector (projector). The input device communicates with the processor, and may receive an input of a user in a plurality of manners. For example, the input device may be a mouse, a keyboard, a touchscreen device, or a sensing device.

It may be understood that FIG. 10 shows merely a simplified design of the network device access apparatus. During actual application, the apparatus may further include other necessary components, including but not limited to any quantity of transceivers, processors, controllers, memories, and the like, and all network devices that can implement this application shall fall within the protection scope of this application.

In a possible design, the apparatus 1000 may be a chip, for example, may be a communication chip that can be used in the network device, and configured to implement a related function of the processor 1010 in the network device. The chip may be a field programmable gate array, a dedicated integrated chip, a system chip, a central processing unit, a network processor, a digital signal processing circuit, or a microcontroller for implementing the related function, or may be a programmable controller or another integrated chip. Optionally, the chip may include one or more memories, configured to store program code. When the code is executed, the processor is enabled to implement a corresponding function.

An embodiment of this application further provides an apparatus. The apparatus may be a network device or a circuit. The apparatus may be configured to perform an action performed by the network device in the foregoing method embodiments.

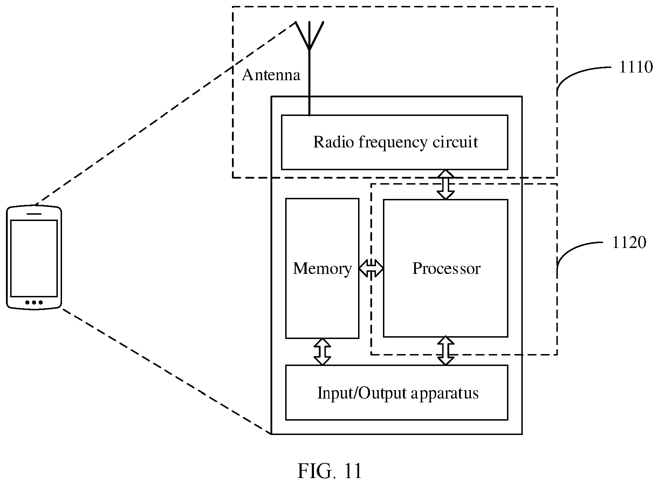

Optionally, when the apparatus in this embodiment is a terminal, FIG. 11 is a schematic diagram of a structure of a simplified terminal. For ease of understanding and illustration, an example in which the terminal is a mobile phone is used in FIG. 11. As shown in FIG. 11, the terminal includes a processor, a memory, a radio frequency circuit, an antenna, and an input/output apparatus. The processor is mainly configured to: process a communication protocol and communication data, control the terminal, execute a software program, process data of the software program, and the like. The memory is mainly configured to store the software program and data. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, such as a touchscreen, a display screen, and a keyboard, is mainly configured to: receive data input by a user and output data to the user. It should be noted that some types of terminals may not include the input/output apparatus.

When data needs to be sent, the processor performs baseband processing on the to-be-sent data, and then outputs a baseband signal to the radio frequency circuit. After performing radio frequency processing on the baseband signal, the radio frequency circuit sends a radio frequency signal in an electromagnetic wave form through the antenna. When data is sent to the terminal, the radio frequency circuit receives a radio frequency signal through the antenna, converts the radio frequency signal into a baseband signal, and outputs the baseband signal to the processor. The processor converts the baseband signal into data, and processes the data. For ease of description, FIG. 11 shows only one memory and one processor. In an actual terminal product, there may be one or more processors and one or more memories. The memory may also be referred to as a storage medium, a storage device, or the like. The memory may be disposed independent of the processor, or may be integrated with the processor. This is not limited in this embodiment of this application.

In this embodiment of this application, the antenna and the radio frequency circuit that have a transceiver function may be considered as a transceiver unit of the terminal, and the processor having a processing function may be considered as a processing unit of the terminal. As shown in FIG. 11, the terminal includes a transceiver unit 1110 and a processing unit 1120. The transceiver unit may also be referred to as a transceiver, a transceiver machine, a transceiver apparatus, or the like. The processing unit may also be referred to as a processor, a processing board, a processing module, a processing apparatus, or the like. Optionally, a component for implementing a receiving function in the transceiver unit 1110 may be considered as a receiving unit, and a component for implementing a sending function in the transceiver unit 1110 may be considered as a sending unit. In other words, the transceiver unit 1110 includes the receiving unit and the sending unit. The transceiver unit may also be sometimes referred to as a transceiver machine, a transceiver, a transceiver circuit, or the like. The receiving unit may also be sometimes referred to as a receiver machine, a receiver, a receiver circuit, or the like. The sending unit may also be sometimes referred to as a transmitter machine, a transmitter, a transmitter circuit, or the like.

It should be understood that the transceiver unit 1110 is configured to perform sending and receiving operations on a terminal side in the foregoing method embodiments, and the processing unit 1120 is configured to perform an operation other than the sending and receiving operations of the terminal in the foregoing method embodiments.

For example, in an implementation, the processing unit 1120 is configured to perform the processing step 304 on the terminal side in FIG. 3. The transceiver unit 1110 is configured to perform sending and receiving operations in step 303 in FIG. 3, and/or the transceiver unit 1110 is further configured to perform other sending and receiving steps on the terminal side in embodiments of this application.

When the communication apparatus is a chip, the chip includes a transceiver unit and a processing unit. The transceiver unit may be an input/output circuit or a communication interface. The processing unit is a processor, a microprocessor, or an integrated circuit integrated on the chip.

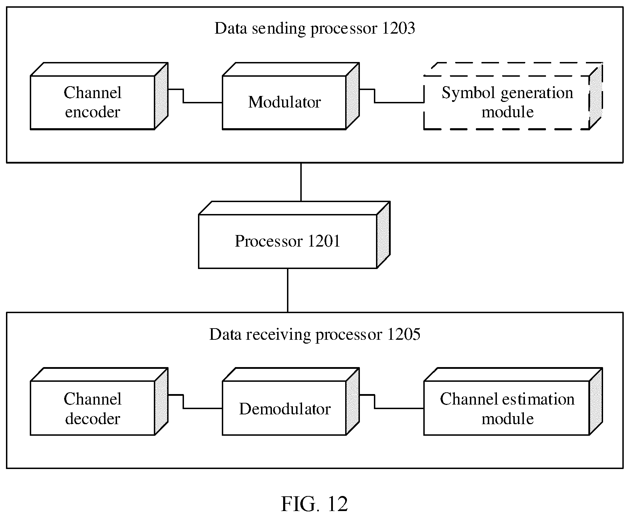

Optionally, when the apparatus is a terminal, further refer to the device shown in FIG. 12. In an example, the device can implement a function similar to that of the processor 610 in FIG. 6. In FIG. 12, the device includes a processor 1201, a data sending processor 1203, and a data receiving processor 1205. The processing module 520 in the foregoing embodiment may be the processor 1201 in FIG. 12, and implements a corresponding function. The transceiver module 510 in the foregoing embodiment may be the data sending processor 1203 and the data receiving processor 1205 in FIG. 12. Although FIG. 12 shows a channel encoder and a channel decoder, it may be understood that the modules are merely examples, and do not constitute a limitation on this embodiment.

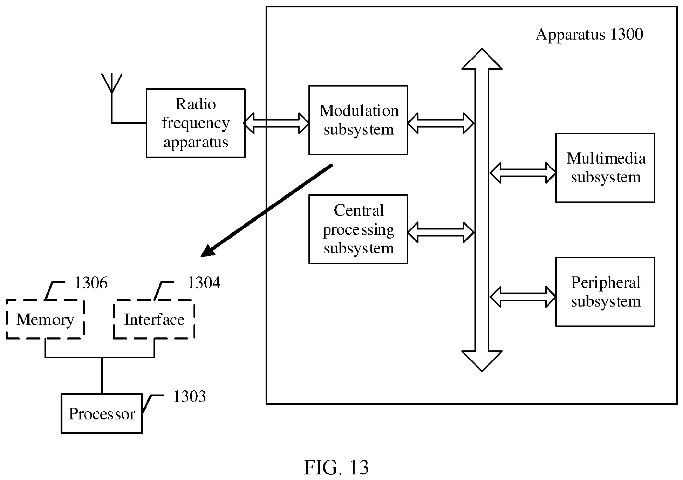

FIG. 13 shows another form of this embodiment. A processing apparatus 1300 includes modules such as a modulation subsystem, a central processing subsystem, and a peripheral subsystem. A communication device in this embodiment may be used as the modulation subsystem in the apparatus. Specifically, the modulation subsystem may include a processor 1303 and an interface 1304. The processor 1303 implements a function of the processing module 520, and the interface 1304 implements a function of the transceiver module 510. In another variant, the modulation subsystem includes a memory 1306, a processor 1303, and a program that is stored in the memory and that is executable on the processor. When executing the program, the processor implements the method according to one of Embodiment 1 to Embodiment 5. It should be noted that the memory 1306 may be non-volatile or may be volatile. A location of the memory 1306 may be located in the modulation subsystem, or may be located in the processing apparatus 1300, provided that the memory 1306 can be connected to the processor 1303.

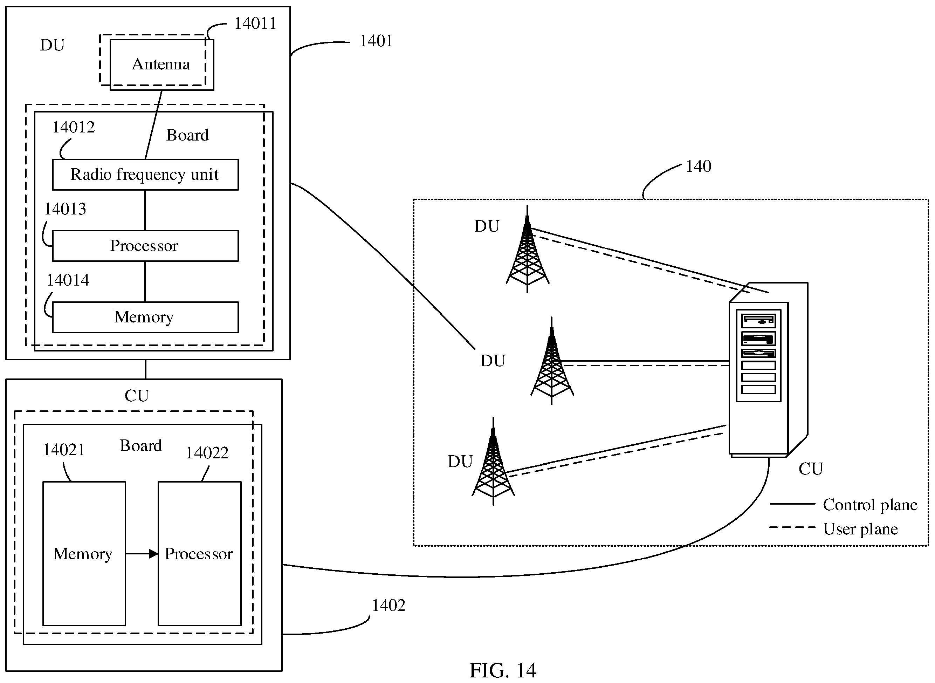

When the apparatus in this embodiment is a network device, the network device may be that shown in FIG. 14. For example, an apparatus 140 is a base station. The base station may be used in the system shown in FIG. 1, to perform a function of the network device in the foregoing method embodiments. The base station 140 may include one or more DUs 1401 and one or more CUs 1402. The CU 1402 may communicate with a next generation core (NG core, NC). The DU 1401 may include at least one antenna 14011, at least one radio frequency unit 14012, at least one processor 14013, and at least one memory 14014. The DU 1401 is mainly configured to: receive and send a radio frequency signal, perform conversion between a radio frequency signal and a baseband signal, and perform partial baseband processing. The CU 1402 may include at least one processor 14022 and at least one memory 14021. The CU 1402 and the DU 1401 may communicate with each other through an interface. A control plane (control plane) interface may be Fs-C, for example, F1-C, and a user plane (user plane) interface may be Fs-U, for example, F1-U.

The CU 1402 is mainly configured to: perform baseband processing, control the base station, and the like. The DU 1401 and the CU 1402 may be physically disposed together, or may be physically disposed separately, that is, may be a distributed base station. The CU 1402 is a control center of the base station, may also be referred to as a processing unit, and is mainly configured to implement a baseband processing function. For example, the CU 1402 may be configured to control the base station to perform an operation procedure related to the network device in the foregoing method embodiments.

Specifically, baseband processing on the CU and the DU may be divided based on protocol layers of a wireless network. For example, functions of a packet data convergence protocol (packet data convergence protocol, PDCP) layer and a protocol layer above the PDCP layer are set in the CU. Functions of protocol layers below the PDCP layer, such as a radio link control (radio link control, RLC) layer and a medium access control (medium access control, MAC) layer, are set in the DU. For another example, the CU implements functions of a radio resource control (radio resource control, RRC) layer and a packet data convergence protocol (packet data convergence protocol, PDCP) layer. The DU implements functions of a radio link control (radio link control, RLC) layer, a MAC layer, and a physical (physical, PHY) layer.

In addition, optionally, the base station 140 may include one or more radio frequency units (RUs), one or more DUs, and one or more CUs. The DU may include at least one processor 14013 and at least one memory 14014. The RU may include at least one antenna 14011 and at least one radio frequency unit 14012. The CU may include at least one processor 14022 and at least one memory 14021.

For example, in an implementation, the processor 14013 is configured to perform the processing step on a network device side in FIG. 3. The radio frequency unit 14012 is configured to perform sending and receiving operations in step 302 and step 303 in FIG. 3. In another implementation, the processor 14013 may be configured to perform the processing step 401 on an access network device side in FIG. 4. The radio frequency unit 14012 is configured to perform the sending and receiving operations in step 402 on the access network device side in FIG. 4.

In an example, the CU 1402 may include one or more boards, and a plurality of boards may jointly support a radio access network (for example, a 5G network) of a single access standard, or may separately support radio access networks (for example, an LTE network, a 5G network, or another network) of different access standards. The memory 14021 and the processor 14022 may serve one or more boards. In other words, a memory and a processor may be independently disposed on each board. Alternatively, a plurality of boards may share a same memory and a same processor. In addition, a necessary circuit may further be disposed on each board. The DU 1401 may include one or more boards, and a plurality of boards may jointly support a radio access network (for example, a 5G network) of a single access standard, or may separately support radio access networks (for example, an LTE network, a 5G network, or another network) of different access standards. The memory 14014 and the processor 14013 may serve one or more boards. In other words, a memory and a processor may be independently disposed on each board. Alternatively, a plurality of boards may share a same memory and a same processor. In addition, a necessary circuit may further be disposed on each board.

All or some of the foregoing embodiments may be implemented by using software, hardware, firmware, or any combination thereof. When software is used to implement embodiments, embodiments may be implemented all or partially in a form of a computer program product. The computer program product includes one or more computer instructions. When the computer instructions are loaded and executed on a computer, the procedures or functions according to embodiments of this application are all or partially generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible to a computer, or a data storage device, such as a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid-state drive, SSD)), or the like.

It should be understood that, the processor may be an integrated circuit chip, and has a signal processing capability. In an implementation process, the steps in the foregoing method embodiments may be completed by using a hardware integrated logic circuit in the processor, or by using instructions in a form of software. The processor may be a general-purpose processor, a digital signal processor (digital signal processor, DSP), an application-specific integrated circuit (application-specific integrated circuit, ASIC), a field programmable gate array (field programmable gate array, FPGA), or another programmable logic device, a discrete gate or a transistor logic device, or a discrete hardware component. The processor may implement or perform the methods, the steps, and logical block diagrams that are disclosed in embodiments of this application. The general-purpose processor may be a microprocessor, or the processor may be any conventional processor or the like. Steps of the methods disclosed with reference to embodiments of this application may be directly performed and completed by a hardware decoding processor, or may be performed and completed by using a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing method in combination with hardware in the processor.

It may be understood that the memory in embodiments of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external high-speed cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

In this application, "at least one" means one or more, and "a plurality of" means two or more. The term "and/or" describes an association relationship between associated objects and indicates that three relationships may exist. For example, A and/or B may represent the following cases: Only A exists, both A and B exist, and only B exists, where A and B may be singular or plural. The character "/" usually indicates an "or" relationship between the associated objects. "At least one of the following items (pieces)" or a similar expression thereof refers to any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

It should be understood that "one embodiment" or "an embodiment" mentioned in the entire specification means that particular features, structures, or characteristics related to embodiments are included in at least one embodiment of this application. Therefore, "in one embodiment" or "in an embodiment" that appears in the entire specification does not necessarily mean a same embodiment. Moreover, the particular features, structures, or characteristics may be combined in one or more embodiments in any appropriate manner. It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

The terms such as "component", "module", and "system" used in this specification are used to indicate computer-related entities, hardware, firmware, combinations of hardware and software, software, or software being executed. For example, a component may be but is not limited to a process that runs on a processor, a processor, an object, an executable file, an execution thread, a program, and/or a computer. As shown in figures, both a computing device and an application that runs on the computing device may be components. One or more components may reside within a process and/or an execution thread, and a component may be located on one computer and/or distributed between two or more computers. In addition, these components may be executed from various computer-readable media that store various data structures. For example, the components may perform communication by using a local and/or remote process and according to, for example, a signal having one or more data packets (for example, data from two components interacting with another component in a local system, a distributed system, and/or across a network such as the Internet interacting with other systems by using the signal).

It should be further understood that "first", "second", and various numerical symbols in this specification are merely used for distinguishing for ease of description, and are not intended to limit the scope of embodiments of this application.

It should be understood that, the term "and/or" in this specification describes only an association relationship between associated objects and indicates that three relationships may exist. For example, A and/or B may indicate the following three cases: Only A exists, both A and B exist, and only B exists. When only A or only B exists, a quantity of A or B is not limited. In an example in which only A exists, it may be understood as that there are one or more A.

A person of ordinary skill in the art may be aware that, with reference to the examples described in embodiments disclosed in this specification, units and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, the unit division is merely logical function division. During actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or the units may be implemented in electrical, mechanical, or other similar forms.

The units described as separate parts may or may not be physically separate, and parts displayed as units may or may not be physical units, and may be located in one position, or may be distributed on a plurality of network units. Some or all of the units may be selected based on actual requirements to achieve the objectives of the solutions in embodiments.

In addition, functional units in embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but the protection scope of this application is not limited thereto. Any variation or replacement readily figured out by a person skilled in the art within the technical scope disclosed in this application shall fall within the protection scope if falling within the scope defined by the wording of the appended claims.

## Claims

1. A network device access method, comprising:
receiving, by a terminal, minimization of drive tests, MDT, configuration information;
performing, by the terminal, MDT measurement based on the MDT configuration information when the terminal is in a radio resource control, RRC, idle state or in an inactive state, to obtain a measurement result, wherein the measurement result comprises area information of the terminal; and
sending, by the terminal, the measurement result to an operation assistance information, OAI, network element when the terminal is in an RRC connected state;
receiving (303), by the terminal, parameter configuration information from the OAI network element, wherein the parameter configuration information was determined by the OAI network element based on the area information of the terminal, and wherein the parameter configuration information is used to indicate a time-frequency resource required by the terminal to transmit data and a cell that can be used by the terminal to transmit the data; and
accessing (304), by the terminal, a network device based on the parameter configuration information.

2. The method according to claim 1, wherein the area information is used to indicate a location of the terminal.

3. The method according to claim 1, wherein the area information is used to indicate a historical movement track or an expected movement track of the terminal.

4. The method according to any one of claims 1 to 3, wherein before the receiving parameter configuration information, the method further comprises:
sending trigger information, wherein the trigger information is used to trigger an operation assistance information, OAI, network element to send the parameter configuration information.

5. A network device access method, comprising:
receiving, by an operation assistance information, OAI, network element, a measurement result, wherein the measurement result comprises area information of a terminal, and the measurement result was obtained by the terminal by performing MDT measurement based on the MDT configuration information when the terminal was in a radio resource control RRC idle state or was in an inactive state;
determining (301), by the OAI network element, parameter configuration information based on the area information of the terminal, wherein the parameter configuration information is used to indicate a time-frequency resource required by the terminal to transmit data and a cell that can be used by the terminal to transmit the data; and
sending (302, 303), by the OAI network element, the parameter configuration information to the terminal.

6. The method according to claim 5, wherein the method further comprises:
receiving area information of the terminal from an access and mobility management function, AMF, network element.

7. A terminal, comprising:
a transceiver module (510), configured to receive minimization of drive tests, MDT, configuration information;
a processing module (520), configured to perform MDT measurement based on the MDT configuration information when the terminal is in a radio resource control, RRC, idle state or in an inactive state, to obtain a measurement result, wherein the measurement result comprises area information of the terminal ;
the transceiver module is further configured to send the measurement result to an operation assistance information, OAI, network element when the terminal is in an RRC connected state;
the transceiver module, further configured to receive parameter configuration information from the OAI network element, wherein the parameter configuration information was determined by the OAI network element based on the area information of the terminal, and wherein the parameter configuration information is used to indicate a time-frequency resource required by the terminal to transmit data and a cell that can be used by the terminal to transmit the data; and
a processing module, configured to access a network device based on the parameter configuration information.

8. The terminal according to claim 7, wherein the area information is used to indicate a location of the terminal.

9. The terminal according to claim 7, wherein the area information is used to indicate a historical movement track or an expected movement track of the terminal.

10. An operation assistance information, OAI, network element, comprising:
a transceiver module, configured to receive a measurement result from an access network device, wherein the measurement result comprises area information of a terminal, and the measurement result was obtained by the terminal by performing MDT measurement based on the MDT configuration information when the terminal was in a radio resource control RRC idle state or was in an inactive state;
a processing module, configured to determine parameter configuration information based on the area information of the terminal, wherein the parameter configuration information is used to indicate a time-frequency resource required by the terminal to transmit data and a cell that can be used by the terminal to transmit the data; and
a transceiver module, configured to send the parameter configuration information to the terminal.

11. The operation assistance information, OAI, network element according to claim 10, wherein the transceiver module is further configured to receive area information of the terminal from an access and mobility management function, AMF, network element.

## Patentansprüche

1. Verfahren für den Zugriff auf eine Netzwerkvorrichtung, umfassend:
Empfangen, durch ein Endgerät, von Konfigurationsinformationen zur Minimierung von Messfahrten, MDT;
Durchführen, durch das Endgerät, einer MDT-Messung basierend auf den MDT-Konfigurationsinformationen, wenn sich das Endgerät in einem Funkressourcensteuerungs- bzw. RRC-Ruhezustand oder in einem inaktiven Zustand befindet, um ein Messergebnis zu erhalten, wobei das Messergebnis Bereichsinformationen des Endgeräts umfasst; und
Senden, durch das Endgerät, des Messergebnisses an ein Betriebsunterstützungsinformations- bzw. OAI-Netzwerkelement, wenn sich das Endgerät in einem RRC-Verbindungszustand befindet;
Empfangen (303), durch das Endgerät, von Parameter-Konfigurationsinformationen vom OAI-Netzwerkelement, wobei die Parameter-Konfigurationsinformationen vom OAI-Netzwerkelement basierend auf den Bereichsinformationen des Endgeräts bestimmt wurden und wobei die Parameter-Konfigurationsinformationen verwendet werden, um eine Zeit-Frequenz-Ressource, die vom Endgerät benötigt wird, um Daten zu übertragen, und eine Zelle, die vom Endgerät verwendet werden kann, um die Daten zu übertragen, anzuzeigen; und
Zugreifen (304), durch das Endgerät, auf eine Netzwerkvorrichtung basierend auf den Parameter-Konfigurationsinformationen.

2. Verfahren gemäß Anspruch 1, wobei die Bereichsinformationen verwendet werden, um einen Standort des Endgeräts anzugeben.

3. Verfahren gemäß Anspruch 1, wobei die Bereichsinformationen verwendet werden, um eine historische Bewegungsbahn oder eine erwartete Bewegungsbahn des Endgeräts anzugeben.

4. Verfahren gemäß einem der Ansprüche 1 bis 3, wobei das Verfahren vor dem Empfangen der Parameter-Konfigurationsinformationen ferner Folgendes umfasst:
Senden von Auslöseinformationen, wobei die Auslöseinformationen verwendet werden, um ein Betriebsunterstützungsinformations- bzw. OAI-Netzwerkelement zum Senden der Parameter-Konfigurationsinformationen zu veranlassen.

5. Verfahren für den Zugriff auf eine Netzwerkvorrichtung, umfassend:
Empfangen, durch ein Betriebsunterstützungsinformations- bzw. OAI-Netzwerkelement, eines Messergebnisses, wobei das Messergebnis Bereichsinformationen eines Endgeräts umfasst und das Messergebnis durch das Endgerät durch Ausführen einer MDT-Messung basierend auf den MDT-Konfigurationsinformationen erhalten wurde, als sich das Endgerät in einem Funkressourcensteuerungs- bzw. RRC-Ruhezustand oder in einem inaktiven Zustand befand;
Bestimmen (301), durch das OAI-Netzwerkelement, von Parameter-Konfigurationsinformationen basierend auf den Bereichsinformationen des Endgeräts, wobei die Parameter-Konfigurationsinformationen verwendet werden, um eine Zeit-Frequenz-Ressource, die vom Endgerät benötigt wird, um Daten zu übertragen, und eine Zelle, die vom Endgerät verwendet werden kann, um die Daten zu übertragen, anzuzeigen; und
Senden (302, 303) durch das OAI-Netzwerkelement, der Parameter-Konfigurationsinformationen an das Endgerät.

6. Verfahren gemäß Anspruch 5, wobei das Verfahren ferner Folgendes umfasst:
Empfangen von Bereichsinformationen des Endgeräts von einem Zugangs- und Mobilitätsmanagementfunktions- bzw. AMF-Netzwerkelement.

7. Endgerät, umfassend:
ein Sendeempfängermodul (510), das dafür ausgelegt ist, Konfigurationsinformationen zur Minimierung von Messfahrten, MDT, zu empfangen;
ein Verarbeitungsmodul (520), das dafür ausgelegt ist, eine MDT-Messung basierend auf den MDT-Konfigurationsinformationen durchzuführen, wenn sich das Endgerät in einem Funkressourcensteuerungs- bzw. RRC-Ruhezustand oder in einem inaktiven Zustand befindet, um ein Messergebnis zu erhalten, wobei das Messergebnis Bereichsinformationen des Endgeräts umfasst;
wobei das Sendeempfängermodul ferner dafür ausgelegt ist, das Messergebnis an ein Betriebsunterstützungsinformations- bzw. OAI-Netzwerkelement zu senden, wenn sich das Endgerät in einem RRC-Verbindungszustand befindet;
und das Sendeempfängermodul ferner dafür ausgelegt ist, Parameter-Konfigurationsinformationen vom OAI-Netzwerkelement zu empfangen, wobei die Parameter-Konfigurationsinformationen vom OAI-Netzwerkelement basierend auf den Bereichsinformationen des Endgeräts bestimmt wurden;
und wobei die Parameter-Konfigurationsinformationen verwendet werden, um eine Zeit-Frequenz-Ressource, die vom Endgerät benötigt wird, um Daten zu übertragen, und eine Zelle, die vom Endgerät verwendet werden kann, um die Daten zu übertragen, anzuzeigen; und
ein Verarbeitungsmodul, das dafür ausgelegt ist, auf eine Netzwerkvorrichtung zuzugreifen, basierend auf den Parameter-Konfigurationsinformationen.

8. Endgerät gemäß Anspruch 7, wobei die Bereichsinformationen verwendet werden, um einen Standort des Endgeräts anzugeben.

9. Endgerät gemäß Anspruch 7, wobei die Bereichsinformationen verwendet werden, um eine historische Bewegungsbahn oder eine erwartete Bewegungsbahn des Endgeräts anzugeben.

10. Betriebsunterstützungsinformations- bzw. OAI-Netzwerkelement, umfassend:
ein Sendeempfängermodul, das dafür ausgelegt ist, ein Messergebnis von einer Zugangsnetzwerkvorrichtung zu empfangen, wobei das Messergebnis Bereichsinformationen eines Endgeräts umfasst und das Messergebnis durch das Endgerät durch Ausführen einer MDT-Messung basierend auf den MDT-Konfigurationsinformationen erhalten wurde, als sich das Endgerät in einem Funkressourcensteuerungs- bzw. RRC-Ruhezustand oder in einem inaktiven Zustand befand;
ein Verarbeitungsmodul, das dafür ausgelegt ist, Parameter-Konfigurationsinformationen basierend auf den Bereichsinformationen des Endgeräts zu bestimmen, wobei die Parameter-Konfigurationsinformationen verwendet werden, um eine Zeit-Frequenz-Ressource, die vom Endgerät benötigt wird, um Daten zu übertragen, und eine Zelle, die vom Endgerät verwendet werden kann, um die Daten zu übertragen, anzuzeigen; und
ein Sendeempfängermodul, das dafür ausgelegt ist, Parameter-Konfigurationsinformationen an das Endgerät zu senden.

11. Betriebsunterstützungsinformations- bzw. OAI-Netzwerkelement gemäß Anspruch 10, wobei das Sendeempfängermodul ferner dafür ausgelegt ist, Bereichsinformationen des Endgeräts von einem Zugangs- und Mobilitätsmanagementfunktions- bzw. AMF-Netzwerkelement zu empfangen.

## Revendications

1. Procédé d'accès à un dispositif de réseau, comprenant :
la réception, par un terminal, d'informations de configuration de minimisation de tests pilotes, MDT ;
l'exécution, par le terminal, d'une mesure de MDT sur la base des informations de configuration de MDT lorsque le terminal est dans un état de veille de commande de ressource radio, RRC, ou dans un état inactif, pour obtenir un résultat de mesure, dans lequel le résultat de mesure comprend des informations de zone du terminal ; et
l'envoi, par le terminal, du résultat de mesure à un élément de réseau d'informations d'aide au fonctionnement, OAI, lorsque le terminal est dans un état connecté de RRC ;
la réception (303), par le terminal, d'informations de configuration de paramètre depuis l'élément de réseau d'OAI, dans lequel les informations de configuration de paramètre ont été déterminées par l'élément de réseau d'OAI sur la base des informations de zone du terminal, et dans lequel les informations de configuration de paramètre sont utilisées pour indiquer une ressource temps-fréquence exigée par le terminal pour transmettre des données et une cellule qui peut être utilisée par le terminal pour transmettre les données ; et
l'accès (304), par le terminal, à un dispositif de réseau sur la base des informations de configuration de paramètre.

2. Procédé selon la revendication 1, dans lequel les informations de zone sont utilisées pour indiquer une position du terminal.

3. Procédé selon la revendication 1, dans lequel les informations de zone sont utilisées pour indiquer un suivi des mouvements historiques ou un suivi des mouvements prévus du terminal.

4. Procédé selon l'une quelconque des revendications 1 à 3, dans lequel avant la réception des informations de configuration de paramètre, le procédé comprend en outre :
l'envoi d'informations de déclenchement, dans lequel les informations de déclenchement sont utilisées pour déclencher l'envoi par un élément de réseau d'informations d'aide au fonctionnement, OAI, des informations de configuration de paramètre.

5. Procédé d'accès à un dispositif de réseau, comprenant :
la réception, par un élément de réseau d'informations d'aide au fonctionnement, OAI, d'un résultat de mesure, dans lequel le résultat de mesure comprend des informations de zone d'un terminal, et le résultat de mesure a été obtenu par le terminal par l'exécution d'une mesure de MDT sur la base des informations de configuration de MDT lorsque le terminal était dans un état de veille de commande de ressource radio, RRC, ou était dans un état inactif ;
la détermination (301), par l'élément de réseau d'OAI, d'informations de configuration de paramètre sur la base des informations de zone du terminal, dans lequel les informations de configuration de paramètre sont utilisées pour indiquer une ressource temps-fréquence exigée par le terminal pour transmettre des données et une cellule qui peut être utilisée par le terminal pour transmettre les données ; et
l'envoi (302, 303), par l'élément de réseau d'OAI, des informations de configuration de paramètre au terminal.

6. Procédé selon la revendication 5, dans lequel le procédé comprend en outre :
la réception d'informations de zone du terminal depuis un élément de réseau de fonction de gestion d'accès et de mobilité, AMF.

7. Terminal comprenant :
un module émetteur-récepteur (510), configuré pour recevoir des informations de configuration de minimisation de tests pilotes, MDT ;
un module de traitement (520), configuré pour exécuter une mesure de MDT sur la base des informations de configuration de MDT lorsque le terminal est dans un état de veille de commande de ressource radio, RRC, ou dans un état inactif, pour obtenir un résultat de mesure, dans lequel le résultat de mesure comprend des informations de zone du terminal ;
le module émetteur-récepteur est en outre configuré pour envoyer le résultat de mesure à un élément de réseau d'informations d'aide au fonctionnement, OAI, lorsque le terminal est dans un état connecté de RRC ;
le module émetteur-récepteur est en outre configuré pour recevoir des informations de configuration de paramètre depuis l'élément de réseau d'OAI, dans lequel les informations de configuration de paramètre ont été déterminées par l'élément de réseau d'OAI sur la base des informations de zone du terminal, et dans lequel les informations de configuration de paramètre sont utilisées pour indiquer une ressource temps-fréquence exigée par le terminal pour transmettre des données et une cellule qui peut être utilisée par le terminal pour transmettre les données ; et
un module de traitement, configuré pour accéder à un dispositif de réseau sur la base des informations de configuration de paramètre.

8. Terminal selon la revendication 7, dans lequel les informations de zone sont utilisées pour indiquer une position du terminal.

9. Terminal selon la revendication 7, dans lequel les informations de zone sont utilisées pour indiquer un suivi des mouvements historiques ou un suivi des mouvements prévus du terminal.

10. Élément de réseau d'informations d'aide au fonctionnement, OAI, comprenant :
un module émetteur-récepteur, configuré pour recevoir un résultat de mesure depuis un dispositif de réseau d'accès, dans lequel le résultat de mesure comprend des informations de zone d'un terminal, et le résultat de mesure a été obtenu par le terminal par l'exécution d'une mesure de MDT sur la base des informations de configuration de MDT lorsque le terminal était dans un état de veille de commande de ressource radio, RRC, ou était dans un état inactif ;
un module de traitement, configuré pour déterminer des informations de configuration de paramètre sur la base des informations de zone du terminal, dans lequel les informations de configuration de paramètre sont utilisées pour indiquer une ressource temps-fréquence exigée par le terminal pour transmettre des données et une cellule qui peut être utilisée par le terminal pour transmettre les données ; et
un module émetteur-récepteur, configuré pour envoyer les informations de configuration de paramètre au terminal.

11. Élément de réseau d'informations d'aide au fonctionnement, OAI, selon la revendication 10, dans lequel le module émetteur-récepteur est en outre configuré pour recevoir des informations de zone du terminal depuis un élément de réseau de fonction de gestion d'accès et de mobilité, AMF.
